(19) Europäisches Patentamt
European Patent Office
Office européen des brevets

(11) EP 2 960 360 B1

(12) # EUROPEAN PATENT SPECIFICATION

(45) Date of publication and mention of the grant of the patent:
**15.01.2020 Bulletin 2020/03**

(21) Application number: **14754728.5**

(22) Date of filing: **20.02.2014**

(51) Int Cl.:
*D01F 6/44* (2006.01) *C08L 23/26* (2006.01)
*C08L 29/14* (2006.01) *C08L 53/02* (2006.01)
*C08L 59/00* (2006.01) *D01F 6/50* (2006.01)
*D04H 1/4282* (2012.01) *D01F 1/10* (2006.01)
*D01F 6/30* (2006.01) *D01F 6/28* (2006.01)

(86) International application number:
**PCT/JP2014/054086**

(87) International publication number:
**WO 2014/129561 (28.08.2014 Gazette 2014/35)**

(54) **FIBER, FABRIC, AND NONWOVEN FABRIC**

FASER, STOFF, UND VLIESSTOFF

FIBRE, TISSU, ET TISSU NON TISSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2013 JP 2013033482**

(43) Date of publication of application:
**30.12.2015 Bulletin 2015/53**

(73) Proprietor: **Kuraray Co., Ltd.**
**Kurashiki-shi, Okayama 710-0801 (JP)**

(72) Inventors:
- **NAKATA, Hiromichi**
  **Kamisu-shi**
  **Ibaraki 314-0197 (JP)**
- **MINAMIDE, Asako**
  **Kamisu-shi**
  **Ibaraki 314-0197 (JP)**
- **TOMOI, Masanori**
  **Saijo-shi**
  **Ehime 793-8585 (JP)**
- **SHIROTANI, Yasuhiro**
  **Saijo-shi**
  **Ehime 793-8585 (JP)**

(74) Representative: **Müller-Boré & Partner Patentanwälte PartG mbB**
**Friedenheimer Brücke 21**
**80639 München (DE)**

(56) References cited:
**EP-A1- 2 223 965**
**WO-A1-2006/101175**
**WO-A1-2009/081877**
**JP-A- S63 203 857**
**JP-A- 2000 143 504**
**JP-A- 2004 256 969**
**JP-A- 2009 542 822**
**US-A1- 2008 161 485**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 960 360 B1

## Description

### Technical Field

The present invention relates to a fiber having excellent adhesiveness and to a fabric and a nonwoven fabric each including the fiber.

### Background Art

Hydrogenated products of block copolymers formed from a conjugated diene compound and an aromatic vinyl compound are elastomers which plasticize upon heating, i.e., so-called thermoplastic elastomers, and show good weatherability and heat resistance and excellent rubber elasticity. Furthermore, the hydrogenated products are highly flexible and, without being vulcanized, show strength and elasticity characteristics equal to those of vulcanized rubbers. The hydrogenated products hence are used not only as substitutes for conventional vulcanized rubbers in miscellaneous daily goods and various industrial supplies including automotive components but also as elastic yarns.
It is known that such hydrogenated products of block copolymers are obtained by hydrogen-adding (hereinafter, sometime abbreviated as "hydrogenating") copolymers of a conjugated diene compound and an aromatic vinyl compound.
However, since the hydrogenated block copolymers are materials having low polarity, elastic yarns made of the hydrogenated block copolymers, when used as an adhesive, have showed insufficient adhesiveness to polar resins, resins containing inorganic fillers (in particular, glass fibers), ceramics, glasses, metals, and the like.
Meanwhile, patent documents 1 to 5 disclose thermoplastic polymer compositions which include a styrene-based thermoplastic elastomer and polyvinyl acetal and which have excellent adhesiveness to ceramics, metals, and synthetic resins. These thermoplastic polymer compositions can be used to bond members of different kinds such as ceramics, metals, and synthetic resins without necessitating application of an adhesive or priming, by molding the composition into a sheet, sandwiching the sheet between the members to be bonded, and heating and pressing the members.

### Related Art Documents

### Patent Documents

Patent Document 1: International Publication WO 2009/081877
Patent Document 2: International Publication WO 2011/125796
Patent Document 3: International Publication WO 2012/005270
Patent Document 4: International Publication WO 2012/026501
Patent Document 5: International Publication WO 2012/014757
Patent Document 6: US2008/161485

### Summary of the Invention

### Problems that the Invention is to Solve

However, the thermoplastic polymer compositions described in patent documents 1 to 5 have poor thin-film moldability, and it is difficult to obtain sheets having a thickness less than 100 μm therefrom by hot-press molding or extrusion molding. Consequently, the adhesive layers have an unnecessarily large thickness, and this has posed problems, for example, in that the material cost is increased and weight and size reductions in the bonded composite materials are hindered. In the case of bonding over a large area, there have been a problem in that when the sheet (adhesive layer) is superposed on an adherend, air comes therebetween (air trapping) and the trapped air prevents contact between the sheet and the adherend in the step of thermal bonding, resulting in bonding failures.
An object of the invention is to provide a fiber and a fabric which are capable of exhibiting excellent adhesiveness regardless of the materials of the members to be bonded, without necessitating priming. Another object of the invention is to attain a reduction in adhesive-layer thickness in bonded composite materials obtained using such fibers as adhesive layers and to diminish air trapping during the production thereof.

Means for Solving the Problems

According to the present invention, the above object can be achieved by the followings:

(1) A fiber comprising a thermoplastic polymer composition that comprises:

a block copolymer (A) comprising at least one polymer block (a1) comprising a unit of an aromatic vinyl compound and at least one polymer block (a2) comprising a unit of a conjugated diene compound;
a polyvinyl acetal resin (B); and
a compatibilizing agent (C),
an amount of the compatibilizing agent (C) being 5 to 100 parts by mass per 100 parts by mass of the block copolymer (A).

(2) The fiber according to (1), wherein the conjugated diene compound for constituting the polymer block (a2) is selected from butadiene and isoprene.
(3) The fiber according to (1) or (2), wherein a block chain of the polymer block (a2) comprises a 1,4-bond in an amount of 50% by mole or less.
(4) The fiber according to (1) or (2), wherein the the block copolymer (A) comprises: a block copolymer (A1) wherein the polymer block (a2) comprises a polymer block (a2-1) in which a block chain comprises a 1,4-bond in an amount of 50% by mole or less; and a block copolymer (A2) wherein the polymer block (a2) comprises a polymer block (a2-2) in which a block chain comprises a 1,4-bond in an amount of 70% by mole or larger.
(5) The fiber according to any one of (1) to (4), wherein at least 70% of unsaturated double bonds in the block copolymer (A) are hydrogenated.
(6) The fiber according to any one of (1) to (5), which comprises the thermoplastic polymer composition that comprises the polyvinyl acetal resin (B) in an amount of 1 to 100 parts by mass per 100 parts by mass of the block copolymer (A).
(7) The fiber according to any one of (1) to (6), wherein the polyvinyl acetal resin (B) is polyvinyl butyral.
(8) The fiber according to any one of (1) to (7), wherein the compatibilizing agent (C) is a polar-group-containing polyolefin.
(9) The fiber according to (8), wherein the polar-group-containing polyolefin is a carboxylic-acid-modified polypropylene-based resin.
(10) A fabric comprising a fiber according to any one of (1) to (9).
(11) The fabric according to (10), which is a nonwoven fabric.
(12) The nonwoven fabric according to (11), wherein an average fiber diameter of the fiber constituting the nonwoven fabric is 1 to 30 $\mu$m.
(13) The nonwoven fabric according to (12), which has a fabric weight of 5 to 150 g/m$^2$.

Effects of the Invention

According to the invention, it is possible to provide a fiber and a fabric including the fabric, the fiber and the fabric showing excellent adhesiveness to materials such as polar resins, resins containing inorganic fillers (in particular, glass fibers), ceramics, glasses, or metals and readily and tenaciously adhering thereto without necessity of primer treatment and so on. It is a matter of course that the fiber according to the invention and the fabric including the fiber are applicable to s polar resins, resins containing inorganic fillers (in particular, glass fibers), ceramics, glasses, metals, or the like, which have undergone priming or the like. In cases when the fabric including the fiber of the invention is used as an adhesive layer between those materials, it is possible to reduce the thickness of the adhesive layer to 100 $\mu$m or less and it is also possible to inhibit air trapping from occurring between the adhesive layer and the adherends during production.

Modes for Carrying Out the Invention

The fiber of the invention includes a thermoplastic polymer composition which includes: a block copolymer (A) including at least one polymer block (a1) including a unit of an aromatic vinyl compound and at least one polymer block (a2) including a unit of a conjugated diene compound; a polyvinyl acetal resin (B); and a compatibilizing agent (C).

[Thermoplastic Polymer Composition]

The thermoplastic polymer composition to be used in the invention includes: a block copolymer (A) including at least one polymer block (a1) including a unit of an aromatic vinyl compound and at least one polymer block (a2)

including a unit of a conjugated diene compound; a polyvinyl acetal resin (B); and a compatibilizing agent (C).

The block copolymer (A) which includes at least one polymer block (a1) including a unit of an aromatic vinyl compound and at least one polymer block (a2) including a unit of a conjugated diene compound encompasses a hydrogenated product of this copolymer, and hereinafter often abbreviated as "block copolymer (A)".

The thermoplastic polymer composition may further include a tackifier resin (D), a softener (E), etc.

(Block Copolymer (A))

The block copolymer (A), which includes at least one polymer block (a1) including a unit of an aromatic vinyl compound and at least one polymer block (a2) including a unit of a conjugated diene compound, to be included in the thermoplastic polymer composition serves to impart flexibility, satisfactory mechanical properties, moldability, etc. to the thermoplastic polymer composition, and functions as a matrix in the composition.

- Polymer Block (a1) including Unit of Aromatic Vinyl Compound -

Examples of the aromatic vinyl compound for constituting the polymer block (a1) including the unit of the aromatic vinyl compound include styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, and 2-vinylnaphthalene. The polymer block (a1) including the unit of the aromatic vinyl compound may be constituted of structural units derived from only one of these aromatic vinyl compounds, or may be constituted of structural units derived from two or more thereof. Preferred of those are styrene, α-methylstyrene, and 4-methylstyrene.

In the invention, the " polymer block (a1) including the unit of the aromatic vinyl compound" preferably is a polymer block which includes the unit of the aromatic vinyl compound in an amount of 80% by mass or larger, more preferably is a polymer block which includes the unit of the aromatic vinyl compound in an amount of 90% by mass or larger, and even more preferably is a polymer block which includes the unit of the aromatic vinyl compound in an amount of 95% by mass or larger (these content values being values in terms of starting material feed amount). The polymer block (a1) including the unit of the aromatic vinyl compound may be configured only of the unit of the aromatic vinyl compound. However, the polymer block (a1) may include a unit of another copolymerizable monomer besides the unit of the aromatic vinyl compound, unless the effects of the invention are lessened thereby.

Examples of the other copolymerizable monomer include 1-butene, pentene, hexene, butadiene, isoprene, and methyl vinyl ether. In the case where the polymer block (a1) includes a unit of such a copolymerizable monomer, the proportion thereof, based on the sum of the unit of the aromatic vinyl compound and the unit of the other copolymerizable monomer, is preferably 20% by mass or less, more preferably 10% by mass or less, even more preferably 5% by mass or less.

The weight average molecular weight, per block, of the polymer block (a1) included in the block copolymer (A) is preferably 15,000 or less, more preferably 10,000 or less, even more preferably 8,000 or less, from the standpoint of moldability. The weight average molecular weight herein means a weight average molecular weight determined through an examination by gel permeation chromatography (GPC) and calculation for standard polystyrene. So long as the weight average molecular weight thereof is within that range, it is easy to produce, from the fiber, a fabric which is dense and has air permeability suitable for adhesive layers.

In the invention, use can also be made of the block copolymer (A) which has a polar group, such as a hydroxy group, bonded to an end thereof.

- Polymer Block (a2) including Unit of Conjugated Diene Compound -

Examples of the conjugated diene compound for constituting the polymer block (a2) including the unit of the conjugated diene compound include butadiene, isoprene, 2,3-dimethyl-1,3-butadiene, 1,3-pentadiene, and 1,3-hexadiene. Preferred of these are butadiene and isoprene.

The polymer block (a2) including the unit of the conjugated diene compound may be constituted of structural units derived from only one of these conjugated diene compounds, or may be constituted of structural units derived from two or more thereof. It is especially preferable that the polymer block (a2) should be constituted of structural units derived from butadiene or isoprene or of structural units derived from butadiene and isoprene.

The bonding form of conjugated dienes of which the block copolymer (a2) including the unit of the conjugated diene compound is constituted are not particularly limited. For example, in the case of butadiene, 1,2-bond and 1,4-bond may be formed. In the case of isoprene, 1,2-bond, 3,4-bond, and 1,4-bond may be formed. It is preferable that the content of 1,4-bond in the block chain of the polymer block (a2) should be 50% by mole or less. So long as the content of 1,4-bond is 50% by mole or less, the fiber has sufficient adhesiveness.

In the case of using two or more kinds of block copolymers (A) in combination, it is preferable, from the standpoint

of improving the low-temperature adhesiveness of the fiber to be obtained, that a block copolymer (A1) wherein the polymer block (a2) includes a polymer block (a2-1) in which the block chain contains 1,4-bond in an amount of 50% by mole or less should be used in combination with a block copolymer (A2) wherein the polymer block (a2) includes a polymer block (a2-2) in which the block chain contains 1,4-bond in an amount of 70% by mole or larger. From the standpoint of a balance between low-temperature adhesiveness and ordinary-temperature adhesiveness, (A1)/(A2) is preferably from 20/80 to 80/20, more preferably from 40/60 to 60/40.

Incidentally, 1,4-bond content can be calculated through an examination by $^{1}$H-NMR spectroscopy. Specifically, the content thereof can be calculated from the ratio between the integral of peaks present at 4.2 to 5.0 ppm and assigned to 1,2-bond and 3,4-bond units and the integral of a peak present at 5.0 to 5.45 ppm and assigned to 1,4-bond units.

In the invention, the "polymer block (a2) including the unit of the conjugated diene compound" preferably is a polymer block which includes the unit of the conjugated diene compound in an amount of 80% by mass or larger, more preferably is a polymer block which includes the unit of the conjugated diene compound in an amount of 90% by mass or larger, and even more preferably is a polymer block which includes the unit of the conjugated diene compound in an amount of 95% by mass or larger (these content values being values in terms of starting material feed amount). The polymer block including the unit of the conjugated diene compound may be configured only of the unit of the conjugated diene compound. However, the polymer block (a2) may include a unit of another copolymerizable monomer besides the unit of the conjugated diene compound, unless the effects of the invention are lessened thereby.

Examples of the other copolymerizable monomer include styrene, $\alpha$-methylstyrene, and 4-methylstyrene. In the case where the polymer block (a2) includes a unit of such a copolymerizable monomer, the proportion thereof, based on the sum of the unit of the conjugated diene compound and the unit of the other copolymerizable monomer, is preferably 20% by mass or less, more preferably 10% by mass or less, even more preferably 5% by mass or less.

The bonding form between the polymer block (a1) including the unit of the aromatic vinyl compound and the polymer block (a2) including the unit of the conjugated diene compound in the block copolymer (A) is not particularly limited, and may be any of linear, branched, and radial bonding forms or be a combination of two or more thereof. It is, however, preferable that these blocks should be bonded in a linear bonding form.

When the polymer block (a1) including the unit of the aromatic vinyl compound and the polymer block (a2) including the unit of the conjugated diene compound are expressed by a and b, respectively, examples of the linear bonding form include: diblock copolymers represented by a-b; triblock copolymers represented by a-b-a or b-a-b; tetrablock copolymers represented by a-b-a-b; pentablock copolymers represented by a-b-a-b-a or b-a-b-a-b; (a-b)nX type copolymers (X represents a coupling residue, and n represents an integer of 2 or larger), and mixtures thereof. Preferred of these are the triblock copolymers. More preferred is the triblock copolymer represented by a-b-a.

From the standpoint of improving heat resistance and weatherability, it is preferable that the block copolymer (A) should be one in which the unsaturated double bond of the polymer block (a2) including the unit of the conjugated diene compound is partly or wholly hydrogenated. The degree of hydrogenation of this polymer block (a2) including the unit of the conjugated diene compound is preferably 70% or higher, more preferably 80% or higher, even more preferably 85% or higher, especially preferably 90% or higher. In this description, values of the degree of hydrogenation are obtained by determining the iodine value of the block copolymer before and after the hydrogenation reaction.

The content of the polymer block (a1) including the unit of the aromatic vinyl compound, in the block copolymer (A), is preferably 5 to 75% by mass, more preferably 8 to 60% by mass, even more preferably 10 to 40% by mass, based on the whole block copolymer (A), from the standpoints of the flexibility and mechanical properties of the copolymer.

The weight average molecular weight of the block copolymer (A) is preferably 30,000 to 300,000, more preferably 40,000 to 200,000, from the standpoints of the mechanical properties and moldability thereof. The weight average molecular weight herein means a weight average molecular weight determined through an examination by gel permeation chromatography (GPC) and calculation for standard polystyrene.

One kind of block copolymer (A) may be used alone, or two or more kinds of block copolymers (A) may be used in combination. In particular, in cases when a low-molecular-weight copolymer having a weight average molecular weight of 30,000 or higher but less than 70,000 is used in combination with a medium- to high-molecular-weight copolymer having a weight average molecular weight of 70,000-300,000, this combination is excellent in terms of all of mechanical property, moldability, and adhesiveness and is hence preferred. Furthermore, in cases when a medium- to high-molecular-weight copolymer which has a weight average molecular weight of 70,000-300,000 and in which the polymer blocks (a1) included in the block copolymer (A) have a weight average molecular weight per block of 8,000 or less is in the combination, it is easy to produce, from the fiber, a fabric which is dense and has air permeability suitable for adhesive layers. For the same reason as mentioned above, the proportion of the low-molecular-weight copolymer/medium- to high-molecular-weight copolymer (mass ratio), in the case of using the two kinds of copolymers in combination, is preferably from 10/90 to 90/10, more preferably from 20/80 to 80/20, even more preferably from 30/70 to 70/30.

(Processes for producing Block Copolymer (A))

Processes for producing the block copolymer (A) are not particularly limited. For example, the block copolymer (A) can be produced by an anionic polymerization method. Specifically, examples thereof include: (i) a method in which an alkyllithium compound is used as an initiator to sequentially polymerize the aromatic vinyl compound, the conjugated diene compound, and then the aromatic vinyl compound; (ii) a method in which an alkyllithium compound is used as an initiator to sequentially polymerize the aromatic vinyl compound and the conjugated diene compound, and a coupling agent is subsequently added to conduct coupling; and (iii) a method in which a dilithium compound is used as an initiator to sequentially polymerize the conjugated diene compound and then the aromatic vinyl compound.
Examples of the alkyllithium compound in (i) and (ii) above include methyllithium, ethyllithium, n-butyllithium, sec-butyllithium, tert-butyllithium, and pentyllithium. Examples of the coupling agent in (ii) include dichloromethane, dibromomethane, dichloroethane, dibromoethane, and dibromobenzene. Examples of the dilithium compound in (iii) include dilithiumnaphthalene and dilithiohexylbenzene.
The use amounts of the initiators, such as these alkyllithium compounds and dilithium compounds, and of the coupling agent are determined in accordance with the desired weight average molecular weight of the block copolymer (A). However, the initiators such as alkyllithium compounds and dilithium compounds are each used usually in an amount of 0.01 to 0.2 parts by mass per 100 parts by mass of the sum of the aromatic vinyl compound and conjugated diene compound used in the anionic polymerization method. Meanwhile, in (ii), the coupling agent is used usually in an amount of 0.001 to 0.8 parts by mass per 100 parts by mass of the sum of the aromatic vinyl compound and conjugated diene compound used in the anionic polymerization method.
It is preferable that the anionic polymerization should be conducted in the presence of a solvent. The solvent is not particularly limited so long as the solvent is inert to the initiator and does not adversely affect the polymerization. Examples thereof include: saturated aliphatic hydrocarbons such as hexane, heptane, octane, and decane; alicyclic saturated hydrocarbons such as cyclopentane, cyclohexane, and cycloheptane; and aromatic hydrocarbons such as toluene, benzene, and xylene. In any of those methods, it is preferred to conduct the polymerization usually at 0 to 80°C for 0.5 to 50 hours.
By adding an organic Lewis base in the anionic polymerization, the 1,2-bond content and 3,4-bond content of the block copolymer (A) can be increased. The 1,2-bond content and 3,4-bond content of the block copolymer (A) can be easily regulated by changing the addition amount of the organic Lewis base.
Examples of the organic Lewis base include: esters such as ethyl acetate; amines such as triethylamine, N,N,N',N'-tetramethylethylenediamine (TMEDA), and N-methylmorpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether and diethylene glycol dimethyl ether; sulfoxides such as dimethyl sulfoxide; and ketones such as acetone and methyl ethyl ketone.
After the polymerization is conducted by any of the methods, the liquid reaction mixture is poured into a poor solvent, e.g., methanol, for the block copolymer contained in the reaction mixture, thereby solidifying the block copolymer. Alternatively, the liquid reaction mixture is poured into hot water together with steam to thereby remove the solvent by azeotropy (steam stripping). Then, an unhydrogenated block copolymer (A) can be isolated by drying.
Furthermore, the unhydrogenated block copolymer (A) obtained above is subjected to hydrogenation reaction. Thus, a hydrogenated block copolymer (A) can be produced. The hydrogenation reaction can be accomplished by reacting the unhydrogenated block copolymer (A) with hydrogen in the presence of a hydrogenation catalyst, either after the unhydrogenated block copolymer (A) obtained above is dissolved in a solvent inert to the reaction and to the hydrogenation catalyst or using the liquid reaction mixture without isolating the unhydrogenated block copolymer (A) therefrom.
Examples of the hydrogenation catalyst include: Raney nickel; heterogeneous catalysts obtained by fixing a metal, such as Pt, Pd, Ru, Rh, or Ni, to a support such as carbon, alumina, or diatomaceous earth; Ziegler catalysts configured of a combination of a transition metal compound with an alkylaluminum compound, alkyllithium compound, or the like; and metallocene catalysts.
The hydrogenation reaction can be conducted usually under the conditions of a hydrogen pressure of 0.1 to 20 MPa, a reaction temperature of 20 to 250°C, and a reaction time of 0.1 to 100 hours. In the case where the hydrogenation reaction is performed by this method, the liquid hydrogenation reaction mixture is poured into a poor solvent such as methanol to cause solidification or is poured into hot water together with steam to remove the solvent by azeotropy (steam stripping), and then the hydrogenated block copolymer (A) can be isolated by drying.

(PolyVinyl Acetal Resin (B))

The polyvinyl acetal resin (B) used in the invention serves to impart adhesiveness to the thermoplastic polymer composition, and is usually present in the state of being dispersed as a dispersed phase (as islands) in a continuous phase (sea) constituted of the block copolymer (A), in the composition. Due to the polyvinyl acetal resin (B), the thermoplastic polymer composition can be well bonded to surfaces of adherends such as ceramics, metals, or synthetic resins without necessitating priming.

The polyvinyl acetal resin (B) usually includes a repeating unit represented by the following formula (I).

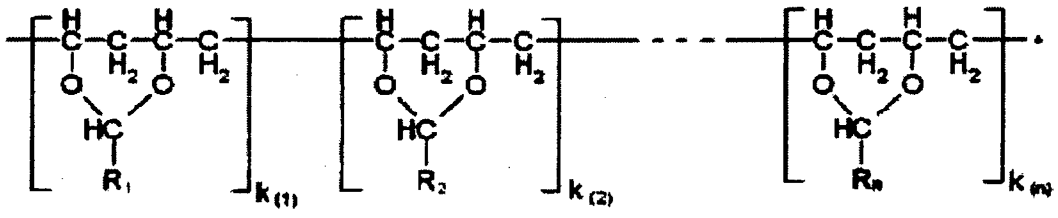

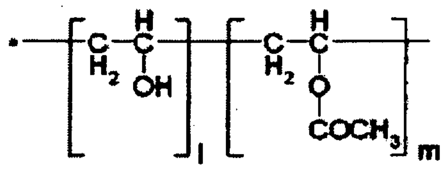

(I)

In formula (I), n represents the number of kinds of the aldehydes used in the acetalization reaction. $R_1$, $R_2$, ···, $R_n$ each represent either an alkyl residue of an aldehyde used for the acetalization reaction or a hydrogen atom; and $k_{(1)}$, $k(_2)$, ···, $k_{(n)}$ represent the proportions (molar ratio) of the respective constituent units in [ ]. Symbol 1 represents the proportion (molar ratio) of vinyl alcohol unit, and m represents the proportion (molar ratio) of vinyl acetate unit.

However, $k_{(1)}+k_{(2)}+ \cdots +k(_n)+1+m=1$, and any of $k_{(1)}$, $k_{(2)}$, ···, $k_{(n)}$, 1, and m may be zero.

The arrangement of the repeating units is not limited to the sequence shown above, and the repeating units may be randomly arranged or may be in a block or taper arrangement.

It is preferable that the polyvinyl acetal resin (B) should be polyvinyl butyral.

(Process for producing Polyvinyl Acetal Resin (B))

The polyvinyl acetal resin (B) can be obtained, for example, by reacting polyvinyl alcohol with an aldehyde.

The polyvinyl alcohol to be used for producing the polyvinyl acetal resin (B) usually has an average degree of polymerization of preferably 100 to 4,000, more preferably 100 to 3,000, even more preferably 100 to 2,000, especially preferably 250 to 2,000, most preferably 250 to 1,000. In cases when the polyvinyl alcohol has an average degree of polymerization of 100 or higher, it is easy to produce the polyvinyl acetal resin (B) therefrom and this polyvinyl alcohol has good handleability. In cases when the polyvinyl alcohol has an average degree of polymerization of 4,000 or less, the melt viscosity during melt kneading is not too high and it is easy to produce the thermoplastic polymer composition.

The average degree of polymerization of polyvinyl alcohol was determined in accordance with JIS K 6726. Specifically, the polyvinyl alcohol was saponified again, purified, and then examined for intrinsic viscosity in 30°C water, and the average degree of polymerization was determined from the intrinsic viscosity.

Processes for producing the polyvinyl alcohol are not particularly limited. For example, use can be made of one produced by saponifying polyvinyl acetate or the like with an alkali, an acid, ammonia water, etc. A commercial product may also be used. Examples of the commercial product include "Kuraray POVAL" series, manufactured by Kuraray Co., Ltd. The polyvinyl alcohol may be one which is completely saponified, or may be one which is partly saponified. The degree of saponification thereof is preferably 80% by mole or higher, more preferably 90% by mole or higher, even more preferably 95% by mole or higher.

As the polyvinyl alcohol, use can be made of a copolymer of vinyl alcohol with a monomer copolymerizable with vinyl alcohol, such as an ethylene/vinyl alcohol copolymer or a partly saponified ethylene/vinyl alcohol copolymer. Also usable is a modified polyvinyl alcohol in which a carboxylic acid or the like is introduced partly. One of these polyvinyl alcohols may be used alone, or two or more thereof may be used in combination.

The aldehyde to be used for producing the polyvinyl acetal resin (B) is not particularly limited. Examples thereof include formaldehyde (including paraformaldehyde), acetaldehyde (including para-acetaldehyde), propionaldehyde, n-butyraldehyde, isobutyraldehyde, pentanal, hexanal, heptanal, n-octanal, 2-ethylhexylaldehyde, cyclohexanecarbaldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. One of these aldehydes may be used alone, or two or more thereof may be used in combination. From the standpoint of ease

of production, the butyraldehydes are preferred of these, and n-butyraldehyde is more preferred.

The polyvinyl acetal resin (B) obtained by acetalization with n-butyraldehyde is especially referred to as polyvinyl butyral (PVB).

In the invention, the proportion of butyral units in the acetal units present in the polyvinyl acetal resin (B) (see the following expression) is preferably 0.8 or higher, more preferably 0.9 or higher, even more preferably 0.95 or higher, especially preferably substantially 1.

Namely, in cases when $R_1$ only is n-$C_3H_7$ in the structural formula of the polyvinyl acetal resin(B) represented by formula (I), the polyvinyl acetal resin preferably is one in which $0.8 \le k_{(1)}/(k_{(1)}+k_{(2)}+\cdots+k_{(n)})$.

The degree of acetalization of the polyvinyl acetal resin (B) to be used in the invention is preferably 55 to 88% by mole. The polyvinyl acetal resin (B) having a degree of acetalization of 55% by mole or higher is low in production cost and easily available and has good melt processability. Meanwhile, the polyvinyl acetal resin (B) having a degree of acetalization of 88% by mole or less is extremely easy to produce and does not require much time for acetalization during the production. This resin (B) is hence economical.

The degree of acetalization of the polyvinyl acetal resin (B) is more preferably 60 to 88% by mole, even more preferably 70 to 88% by mole, especially preferably 75 to 85% by mole. The lower the degree of acetalization of the polyvinyl acetal resin (B), the higher the proportion of hydroxy groups included in the polyvinyl acetal resin (B) and the more the fiber is advantageous in terms of adhesiveness to ceramics, metals, and synthetic resins. However, by regulating the degree of acetalization thereof to a value within that range, the affinity and compatibility between the resin (B) and the block copolymer (A) are improved, thereby enabling the thermoplastic polymer composition to have excellent mechanical properties and enhanced strength of adhesion to ceramics, metals, and synthetic resins.

The degree of acetalization (% by mole) of the polyvinyl acetal resin (B) is defined by the following expression.

$$\text{Degree of acetalization (mol\%)} = \{k_{(1)}+k_{(2)}+\cdots+k_{(n)}\}\times 2/\{\{k_{(1)}+k_{(2)}+\cdots+k_{(n)}\}\times 2+l+m\}\times 100$$

(In the expression, n, $k_{(1)}$, $k_{(2)}$, $\cdots$, $k_{(n)}$, 1, and m are as defined hereinabove.)

The degree of acetalization of the polyvinyl acetal resin (B) can be determined in accordance with the method described in JIS K 6728 (1977). Namely, the mass proportion of vinyl alcohol units ($l_0$) and the mass proportion of vinyl acetate units (mo) are determined by titration, and the mass proportion of vinyl acetal units ($k_0$) is determined by $k_0=1-l_0-m_0$. From these values, the molar proportion of vinyl alcohol units l [$l=(l_0/44.1)/(l_0/44.1+m_0/86.1+2k_0/Mw(acetal))$] and the molar proportion of vinyl acetate units m [$m=(m_0/86.1)/(l_0/44.1+m_0/86.1+2k_0/Mw(acetal))$] are calculated. Using the calculation formula k=1-l-m, the molar proportion of vinyl acetal units ($k=k_{(1)}+k_{(2)}+\cdots+k_{(n)}$) is obtained. Here, Mw(acetal) is molecular weight per vinyl acetal unit; for example, in the case of poly(vinyl butyral), Mw(acetal)=Mw(butyral)=142.2. Then, the degree of acetalization (% by mole) can be determined using the calculation formula $\{k_{(1)}+k_{(2)}+\cdots+k_{(n)}\}\times 2/\{\{k_{(1)}+k_{(2)}+\cdots+k_{(n)}\}\times 2+1+m\}\times 100$.

The degree of acetalization of the polyvinyl acetal resin (B) may be determined also by dissolving the polyvinyl acetal resin (B) in an appropriate deuterized solvent such as deuterized dimethyl sulfoxide, examining the solution by $^1$H-NMR or $^{13}$C-NMR, and calculating the degree of acetalization therefrom.

The polyvinyl acetal resin (B) includes vinyl alcohol units in an amount of preferably 12 to 45% by mole ($0.12 \le 1 \le 0.45$), more preferably 12 to 40% by mole ($0.12 \le 1 \le 0.40$), and includes vinyl acetate units in an amount of preferably 0 to 5% by mole ($0 \le m \le 0.05$), more preferably 0 to 3% by mole ($0 \le m \le 0.03$).

The reaction between polyvinyl alcohol and an aldehyde (acetalization reaction) can be conducted by a known method. Examples thereof include: an aqueous medium method in which an aqueous solution of polyvinyl alcohol is subjected to acetalization reaction with an aldehyde in the presence of an acid catalyst to precipitate particles of a polyvinyl acetal resin (B); and a solvent method in which polyvinyl alcohol is dispersed in an organic solvent and subjected to acetalization reaction with an aldehyde in the presence of an acid catalyst, and the liquid reaction mixture obtained is mixed with water or the like, which is a poor solvent for polyvinyl acetal resins (B), to thereby precipitate a polyvinyl acetal resin (B).

The acid catalyst is not particularly limited, and examples thereof include: organic acids such as acetic acid and p-toluenesulfonic acid; inorganic acids such as nitric acid, sulfuric acid, and hydrochloric acid; gases which, when dissolved in water, give acidic aqueous solutions, such as carbon dioxide; and cation-exchange resins and solid-acid catalysts such as metal oxides.

The slurry yielded in the aqueous medium method, solvent method, or the like is usually acidic due to the acid catalyst. Examples of methods for removing the acid catalyst include: a method in which the slurry is repeatedly washed with water to adjust the pH thereof to preferably 5 to 9, more preferably 6 to 9, even more preferably 6 to 8; a method in which a neutralizer is added to the slurry to adjust the pH thereof to preferably 5 to 9, more preferably 6 to 9, even

more preferably 6 to 8; and a method in which an alkylene oxide or the like is added to the slurry.

Examples of the compound to be used for the pH adjustment include: hydroxides of alkali metals, such as sodium hydroxide and potassium hydroxide; acetates of alkali metals, such as sodium acetate; carbonates of alkali metals, such as sodium carbonate and potassium carbonate; hydrogen carbonates of alkali metals, such as sodium hydrogen carbonate; and ammonia and aqueous ammonia solutions. Examples of the alkylene oxide or the like include ethylene oxide, propylene oxide, and glycidyl ethers such as ethylene glycol diglycidyl ether.

Next, the salt yielded by the neutralization, the aldehyde residue remaining after the reaction, etc. are removed.

Methods for the removal are not particularly limited, and use is usually made, for example, of a method in which dehydration and water washing are repeated. The polyvinyl acetal resin (B) which is in a hydrous state and from which the residue, etc. is removed is dried according to need and processed into a powder form, granular form, or pellet form according to need.

The polyvinyl acetal resin (B) to be used in the invention preferably is one from which the aldehyde reaction residue, water, etc. are diminished by performing degassing under reduced pressure when the dried resin is processed into a powder form, granular form, or pellet form.

It is preferable that the thermoplastic polymer composition should include the polyvinyl acetal resin (B) in an amount of 1 to 100 parts by mass per 100 parts by mass of the block copolymer (A). In case where the amount of the polyvinyl acetal resin (B) is less than 1 part by mass, it is difficult to obtain sufficient adhesiveness to ceramics, metals, and synthetic resins. The amount thereof is more preferably 5 parts by mass or larger, even more preferably 10 parts by mass or larger, especially preferably 15 parts by mass or larger. Meanwhile, in case where the amount of the polyvinyl acetal resin (B) is larger than 100 parts by mass, this thermoplastic polymer composition is prone to be rigid and is less apt to have flexibility and mechanical properties, although sufficient adhesiveness is obtained. The amount thereof is more preferably 70 parts by mass or less, even more preferably 50 parts by mass or less, especially preferably 45 parts by mass or less. To sum up, the content of the polyvinyl acetal resin (B) per 100 parts by mass of the block copolymer (A) is desirably 1 to 70 parts by mass, preferably 5 to 70 parts by mass, more preferably 10 to 70 parts by mass, even more preferably 10 to 50 parts by mass, especially preferably 15 to 45 parts by mass.

(Compatibilizing Agent(C))

The thermoplastic polymer composition to be used in the invention further includes a compatibilizing agent (C). As the compatibilizing agent (C), it is preferred to use, for example, a polar-group-containing polyolefin. Examples of the polar-group-containing polyolefin include a polar-group-containing polyethylene-based copolymer and a polar-group-containing polypropylene-based resin.

The incorporation of the compatibilizing agent (C) into the thermoplastic polymer composition is preferred because more stable fiber production is rendered possible and better adhesiveness is imparted.

Due to the compatibilizing agent (C) incorporated into the thermoplastic polymer composition, not only better moldability is imparted to the thermoplastic polymer composition but also the fibers formed from this thermoplastic polymer composition can bond adherend members well even through a heat treatment conducted at 190°C or lower, regardless of the kind of the material of the adherend members.

Detailed reasons why such effects are obtained have not been fully elucidated. It is, however, thought that those effects are produced since each component is in a dispersed state in the thermoplastic polymer composition. It is thought that the polyvinyl acetal resin (B) is distributed also in the surface of the composition, and that the strength of bonding between the block copolymer (A) and the compatibilizing agent (C) and between the polyvinyl acetal resin (B) and the compatibilizing agent (C) is so high that no rupture occurs at the boundaries between the components during the peeling. It is thought that the effects peculiar to the present invention are hence produced.

The thermoplastic polymer composition includes the compatibilizing agent (C) in an amount of 5 to 100 parts by mass per 100 parts mass of the block copolymer (A). So long as the amount of the compatibilizing agent (C) is 5 parts by mass or larger, the composition can be more well bonded to adherend members through a heat treatment conducted at 190°C or lower, regardless of the kind of the material of the adherend members. Meanwhile, in case where the amount of the compatibilizing agent (C) is larger than 100 parts by mass, this thermoplastic polymer composition is prone to be rigid and is less apt to have flexibility and mechanical properties, although sufficient adhesiveness is obtained. The content of the compatibilizing agent (C) per 100 parts by mass of the block copolymer (A) is preferably 10 parts by mass or larger, more preferably 15 parts by mass or larger, even more preferably 20 parts by mass or larger. The content thereof is more preferably 70 parts by mass or less, even more preferably 60 parts by mass or less, most preferably 50 parts by mass or less.

An explanation is given below on the polar-group-containing polyethylene-based copolymer and polar-group-containing polypropylene-based resin which are examples of the polar-group-containing polyolefin usable as the compatibilizing agent (C).

(Polar-group-containing Polyethylene-based Copolymer)

Examples of the polar groups of the polar-group-containing polyethylene-based copolymer include ester groups, hydroxy group, amide group, and halogen atoms including chlorine atom.

Preferred as the polar-group-containing polyethylene-based copolymer are polar-group-containing polyethylene-based copolymers obtained from ethylene and one or more polar-group-containing copolymerizable monomers. In the polar-group-containing polyethylene-based copolymers, other olefinic copolymerizable monomers may be copolymerized, such as, for example, propylene, 1-butene, 1-pentene, 1-hexene, 1-octene, 4-emthyl-1-pentene, and cyclohexene. Examples of the polar-group-containing copolymerizable monomers include (meth)acrylic acid esters, (meth)acrylic acid, vinyl acetate, vinyl chloride, ethylene oxide, propylene oxide, and acrylamide. One of these polar-group-containing copolymerizable monomers may be used alone, or two or more thereof may be used in combination. Preferred of these are (meth)acrylic acid esters.

Examples of the (meth)acrylic acid esters, which are preferred as the polar-group-containing copolymerizable monomers, include: alkyl esters of acrylic acid, such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, and 2-ethylhexyl acrylate; and alkyl esters of methacrylic acid, such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, and 2-ethylhexyl methacrylate. One of these (meth)acrylic acid esters may be used alone, or two or more thereof may be used in combination. Preferred of these are alkyl esters of acrylic acid. More preferred are methyl acrylate and ethyl acrylate. Even more preferred is methyl acrylate, from the standpoint of obtaining high adhesiveness through a heat treatment conducted at 190°C or lower.

The polymerization form of the polar-group-containing polyethylene-based copolymer is not particularly limited, and use can be made of random copolymers, block copolymers, etc. Preferred of these are random copolymers.

The polar groups included in the polar-group-containing polyethylene-based copolymer may undergone a post-treatment after the polymerization. For example, the (meth)acrylic acid may be neutralized with metal ions to give an ionomer, or the vinyl acetate may be hydrolyzed or otherwise treated.

The melt flow rate (MFR) of the polar-group-containing polyethylene-based copolymer, as measured under the conditions of 190°C and a load of 2.16 kg (21.18 N), is preferably 0.1 to 100 g/10 min, more preferably 0.1 to 70 g/10 min, more preferably 0.1 to 50 g/10 min, even more preferably 1 to 30 g/10 min, furthermore preferably 1 to 20 g/10 min, especially preferably 1 to 10 g/10 min. So long as the MFR of the polar-group-containing polyethylene-based copolymer as measured under those conditions is 0.1 g/10 min or higher, sufficient bonding strength is obtained even through a heat treatment conducted at 190°C or lower. Meanwhile, so long as the MFR thereof is 100 g/10 min or less, this copolymer is easily available and it is easy to impart mechanical properties.

The Vicat softening point of the polar-group-containing polyethylene-based copolymer is preferably 40 to 100°C, more preferably 45 to 95°C, even more preferably 45 to 75°C, especially preferably 45 to 65°C, most preferably 45 to 55°C. So long as the Vicat softening point of the polar-group-containing polyethylene-based copolymer is 40°C or higher, the thermoplastic polymer composition has good mechanical properties. Meanwhile, so long as the Vicat softening point thereof is 100°C or lower, heightened bonding strength is obtained even through a heat treatment conducted at 190°C or lower.

The proportion of polar-group-containing structural units included in the polar-group-containing polyethylene-based copolymer to all the structural units included in the polar-group-containing polyethylene-based copolymer is preferably 1 to 99% by mass, more preferably 1 to 50% by mass, even more preferably 1 to 40% by mass, especially preferably 5 to 30% by mass. So long as the proportion of the polar-group-containing structural units is within that range, not only the affinity and compatibility between this copolymer and the block copolymer (A) but also the affinity and compatibility between this copolymer and the polyvinyl acetal resin (B) are well, and the thermoplastic polymer composition has good mechanical properties and has enhanced adhesiveness regardless of the materials of members to be bonded. This composition hence shows heightened bonding strength even through a heat treatment conducted at 190°C or lower.

Incidentally, as the proportion of polar-group-containing structural units becomes smaller, the mechanical properties of the thermoplastic polymer composition tend to decrease. As the proportion of polar-group-containing structural units becomes larger, the affinity and compatibility between this polyethylene-based copolymer and the block copolymer (A) tend to decrease.

It is preferable that the thermoplastic polymer composition should include the polar-group-containing polyethylene-based copolymer in an amount of 5 to 100 parts by mass per 100 parts by mass of the block copolymer (A). So long as the amount of the polar-group-containing polyethylene-based copolymer is 5 parts by mass or larger, members to be bonded can be well bonded through a heat treatment conducted at 190°C or lower, regardless of the materials of the members. Meanwhile, in case where the amount of the polar-group-containing polyethylene-based copolymer is larger than 100 parts by mass, this thermoplastic polymer composition is prone to be rigid and is less apt to have flexibility

and mechanical properties, although sufficient adhesiveness is obtained. The content of the polar-group-containing polyethylene-based copolymer per 100 parts by mass of the block copolymer (A) is preferably 10 parts by mass or larger, more preferably 20 parts by mass or larger, even more preferably 35 parts by mass or larger. The content thereof is more preferably 70 parts by mass or less, even more preferably 60 parts by mass or less.

To sum up, the content of the polar-group-containing polyethylene-based copolymer per 100 parts by mass of the block copolymer (A) is preferably 5 to 70 parts by mass, more preferably 10 to 70 parts by mass, even more preferably 20 to 70 parts by mass, especially preferably 35 to 60 parts by mass.

(Polar-group-containing Polypropylene-based Resin)

A polar-group-containing polypropylene-based resin may be incorporated into the thermoplastic polymer composition besides the block copolymer (A) and the polyvinyl acetal resin (B). Due to the incorporation thereof, not only better moldability is imparted to the thermoplastic polymer composition but also the fibers formed from this thermoplastic polymer composition can well bond adherend members even through a heat treatment conducted at 190°C or lower, regardless of the kind of the materials of the adherend members. In addition, the high adhesiveness is maintained even when the bonded structure obtained is exposed to temperature environments of 60°C or higher.

Examples of the polar groups of the polar-group-containing polypropylene-based resin include a (meth)acryloyloxy group, hydroxy group, amide group, halogen atoms including chlorine atom, carboxyl group, and acid anhydride groups. Processes for producing the polar-group-containing polypropylene-based resin are not particularly limited. This resin may be obtained by subjecting propylene (optionally together with an $\alpha$-olefin) and one or more polar-group-containing copolymerizable monomers to random copolymerization, block copolymerization, or graft copolymerization by a known method. Another method for obtaining the resin is to subject a polypropylene-based resin to a reaction such as oxidation or chlorination by a known method.

Examples of the $\alpha$-olefin include ethylene, 1-butene, 1-pentene, 1-hexene, 1-octene, 4-methyl-1-pentene, and cyclohexene. The proportion of units derived from such $\alpha$-olefins other than propylene to all the structural units included in the polar-group-containing polypropylene-based resin is preferably 0 to 45% by mole, more preferably 0 to 35% by mole, even more preferably 0 to 25% by mole.

Examples of the polar-group-containing copolymerizable monomers include vinyl acetate, vinyl chloride, ethylene oxide, propylene oxide, acrylamide, and unsaturated carboxylic acids or esters or anhydrides thereof. Preferred of these are unsaturated carboxylic acids or esters or anhydrides thereof. Examples of the unsaturated carboxylic acids or esters or anhydrides thereof include (meth)acrylic acid, (meth)acrylic acid esters, maleic acid, maleic anhydride, fumaric acid, itaconic acid, itaconic anhydride, Himic acid, and Himic anhydride. More preferred of these is maleic anhydride. One of these polar-group-containing copolymerizable monomers may be used alone, or two or more thereof may be used in combination.

From the standpoint of compatibility with the polyvinyl acetal resin (B), it is preferable that the polar-group-containing polypropylene-based resin should be a polypropylene which includes carboxyl groups as the polar groups, that is, a carboxylic-acid-modified polypropylene-based resin. More preferred is a maleic-anhydride-modified polypropylene-based resin.

Examples of the (meth)acrylic acid esters shown above as an example of the polar-group-containing copolymerizable monomers include: alkyl esters of acrylic acid, such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, and 2-ethylhexyl acrylate; and alkyl esters of methacrylic acid, such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, and 2-ethylhexyl methacrylate. One of these (meth)acrylic acid esters may be used alone, or two or more thereof may be used in combination.

The polymerization form of the polar-group-containing polypropylene-based resin is not particularly limited, and use can be made of random copolymers, block copolymers, graft copolymers, etc. Preferred of these are random copolymers and graft copolymers. More preferred are graft copolymers.

The polar groups included in the polar-group-containing polypropylene-based resin may undergone a post-treatment after the polymerization. For example, the (meth)acrylic acid groups or carboxyl groups may be neutralized with metal ions to give an ionomer, or may be esterified with methanol or ethanol. Furthermore, the vinyl acetate may be hydrolyzed or otherwise treated.

The melt flow rate (MFR) of the polar-group-containing polypropylene-based resin, as measured under the conditions of 230°C and a load of 2.16 kg (21.18 N), is desirably 0.1 to 100 g/10 min, preferably 0.1 to 70 g/10 min, more preferably 0.1 to 50 g/10 min, even more preferably 1 to 30 g/10 min, furthermore preferably 1 to 20 g/10 min, especially preferably 1 to 15 g/10 min. So long as the MFR of the polar-group-containing polypropylene-based resin as measured under those conditions is 0.1 g/10 min or higher, sufficient bonding strength is obtained at a temperature of 190°C or lower. Meanwhile, so long as the MFR thereof is 100 g/10 min or less, this copolymer is easily available and it is easy

to impart mechanical properties.

The melting point of the polar-group-containing polypropylene-based resin is preferably 100°C or higher, more preferably 110 to 170°C, even more preferably 120 to 150°C, especially preferably 120 to 140°C, from the standpoint of heat resistance.

The proportion of polar-group-containing structural units included in the polar-group-containing polypropylene-based resin to all the structural units included in the polar-group-containing polypropylene-based resin is preferably 0.01 to 10% by mass, more preferably 0.01 to 5% by mass, even more preferably 0.1 to 3% by mass, especially preferably 0.1 to 2% by mass. So long as the proportion of the polar-group-containing structural units is within that range, not only the affinity and compatibility between this resin and the block copolymer (A) but also the affinity and compatibility between this resin and the polyvinyl acetal resin (B) are good, and the thermoplastic polymer composition has good mechanical properties. In addition, the fibers formed from the thermoplastic polymer composition show enhanced adhesiveness and enhanced bonding strength at 190°C or lower, regardless of the materials of members to be bonded. Use may be made of a method in which a polypropylene-based resin having polar-group-containing structural units in a high concentration is diluted with a polypropylene-based resin having no polar-group-containing structural units, so that the proportion of polar-group-containing structural units is optimized.

It is preferable that the thermoplastic polymer composition should contain the polar-group-containing polypropylene-based resin in an amount of 5 to 100 parts by mass per 100 parts by mass of the block copolymer (A). In case where the amount of the polar-group-containing polypropylene-based resin is less than 5 parts by mass, the fibers formed from the thermoplastic polymer composition are difficult to bond to adherend members at 190°C or lower depending on the materials of the adherend members and the resultant bonded structure, when exposed to a temperature environment of 60°C or higher, shows practically insufficient bonding strength and is prone to suffer separation. Meanwhile, in case where the amount of the polar-group-containing polypropylene-based resin is larger than 100 parts by mass, this thermoplastic polymer composition is prone to be rigid and is less apt to have flexibility and mechanical properties, although sufficient adhesiveness is obtained.

The content of the polar-group-containing polypropylene-based resin per 100 parts by mass of the block copolymer (A) is more preferably 10 parts by mass or larger, even more preferably 15 parts by mass or larger, especially preferably 20 parts by mass or larger, and is more preferably 70 parts by mass or less, even more preferably 60 parts by mass or less, especially preferably 30 parts by mass or less.

To sum up, the content of the polar-group-containing polypropylene-based resin per 100 parts by mass of the block copolymer (A) is preferably 5 to 70 parts by mass, more preferably 10 to 70 parts by mass, even more preferably 10 to 60 parts by mass, especially preferably 10 to 30 parts by mass, most preferably 20 to 30 parts by mass.

(Tackifier Resin (D))

A tackifier resin (D) other than the polyvinyl acetal resin (B) can be further incorporated into the thermoplastic polymer composition according to need. By incorporating a tackifier resin (D), the moldability is further improved while maintaining the adhesive properties.

Examples of the tackifier resin (D) include aliphatic unsaturated hydrocarbon resins, aliphatic saturated hydrocarbon resins, alicyclic unsaturated hydrocarbon resins, alicyclic saturated hydrocarbon resins, aromatic hydrocarbon resins, hydrogenated aromatic hydrocarbon resins, rosin ester resins, hydrogenated rosin ester resins, terpene phenol resins, hydrogenated terpene phenol resins, terpene resins, hydrogenated terpene resins, terpene resins modified with aromatic hydrocarbons, coumarone-indene resins, phenol resins, and xylene resins. One of such tackifier resins (D) may be used alone, or two or more thereof may be used in combination. Preferred of these are aliphatic saturated hydrocarbon resins, alicyclic saturated hydrocarbon resins, hydrogenated aromatic hydrocarbon resins, and hydrogenated terpene resins. More preferred are hydrogenated aromatic hydrocarbon resins and hydrogenated terpene resins.

The softening point of the tackifier resin (D) is preferably 50 to 200°C, more preferably 65 to 180°C, even more preferably 80 to 160°C. So long as the softening point thereof is 50°C or higher, the adhesive properties for ambient temperatures can be maintained. Meanwhile, so long as the softening point thereof is 200°C or lower, the adhesive properties for heat treatment temperatures can be maintained.

Here, the values of softening point were measured in accordance with ASTM 28-67.

In the case where the thermoplastic polymer composition contains the tackifier resin (D), the content thereof per 100 parts by mass of the block copolymer (A) is preferably 1 to 100 parts by mass, more preferably 5 to 70 parts by mass, even more preferably 5 to 50 parts by mass, especially preferably 10 to 45 parts by mass. So long as the content of the tackifier resin (D) is 100 parts by mass or less per 100 parts by mass of the block copolymer (A), the thermoplastic polymer composition is not rigid and is apt to have flexibility and mechanical properties.

(Softener (E))

A softener (E) may be incorporated according to need into the thermoplastic polymer composition to be used in the invention. Examples of the softener (E) include softeners which are in general use in rubbers and plastics.
Examples thereof include: process oils such as paraffinic, naphthenic, and aromatic process oils; phthalic acid derivatives such as dioctyl phthalate and dibutyl phthalate; and white oil, mineral oils, ethylene/$\alpha$-olefin oligomers, paraffin waxes, liquid paraffin, polybutene, low-molecular-weight polybutadiene, and low-molecular-weight polyisoprene. Preferred of these are process oils. More preferred are paraffinic process oils.
Also usable are known softeners which are generally used in combination with polyvinyl acetal resins, such as, for example, plasticizers based on organic acid esters, e.g., esters of monobasic organic acids and esters of polybasic organic acids, and plasticizers based on phosphoric acid, e.g., organic esters of phosphoric acid and organic esters of phosphorous acid.
Examples of the esters of monobasic organic acids include glycol esters obtained by the reaction of a glycol such as triethylene glycol, tetraethylene glycol, or tripropylene glycol with a monobasic organic acid such as butyric acid, isobutyric acid, caproic acid, 2-ethylbutyric acid, heptylic acid, n-octylic acid, 2-ethylhexylic acid, pelargonic acid (n-nonylic acid), or decylic acid, the glycol esters being represented by triethylene glycol dicaproate, triethylene glycol di(2-ethylbutyrate), triethylene glycol di(n-octylate), triethylene glycol di(2-ethylhexylate), and the like.
Examples of the esters of polybasic organic acids include esters of a polybasic organic acid, such as adipic acid, sebacic acid, or azelaic acid, with an alcohol, the esters being represented by dibutyl sebacate, dioctyl azelate, and adipic acid/dibutyl Carbitol ester.
Examples of the organic esters of phosphoric acid include tributoxyethyl phosphate, isodecyl phenyl phosphate, and triisopropyl phosphate.
One of such softeners (E) may be used alone, or two or more thereof may be used in combination.
In the case of using the softener (E), the composition may include the softener (E) in an amount of preferably 0.1 to 300 parts by mass, more preferably 1 to 200 parts by mass, even more preferably 10 to 200 parts by mass, especially preferably 50 to 200 parts by mass, most preferably 50 to 150 parts by mass, per 100 parts by mass of the block copolymer (A) from the standpoints of flexibility, moldability, and adhesiveness.

(Other Optional Ingredients)

The thermoplastic polymer composition to be used in the invention may include other thermoplastic polymers, such as olefin-based polymers having no polar groups, styrene-based polymers, polyphenylene ether-based resins, and polyethylene glycol, or other thermoplastic elastomers, such as olefin-based thermoplastic elastomers, urethane-based thermoplastic elastomers, polyamide-based thermoplastic elastomers, or acrylic thermoplastic elastomers, according the need so long as the effects of the invention are not considerably lessened thereby. Examples of the olefin-based polymers include polyethylene, polypropylene, polybutene, and block or random copolymers of propylene with other $\alpha$-olefin(s) such as ethylene or 1-butene.
In the case where such other thermoplastic polymers are contained, the content thereof per 100 parts by mass of the block copolymer (A) is desirably 100 parts by mass or less, preferably 50 parts by mass or less, more preferably 20 parts by mass or less, even more preferably 10 parts by mass or less, especially preferably 5 parts by mass or less.
The thermoplastic polymer composition to be used in the invention may include an inorganic filler according to need. Inorganic fillers are useful for improving properties of the thermoplastic polymer composition, such as heat resistance and weatherability, and for hardness regulation, and are also useful as an extender for a profitability improvement, etc. This inorganic filler is not particularly limited, and examples thereof include calcium carbonate, talc, magnesium hydroxide, aluminum hydroxide, mica, clay, natural silicic acid, synthetic silicic acid, titanium oxide, carbon black, barium sulfate, glass balloons, and glass fibers. One inorganic filler may be used alone, or two or more inorganic fillers may be used in combination. In the case where an inorganic filler is included, it is preferable that the content thereof should be in such a range that the flexibility of the thermoplastic polymer composition is not impaired. In general, the content thereof per 100 parts by mass of the block copolymer (A) is preferably 100 parts by mass of less, more preferably 70 parts by mass or less, even more preferably 30 parts by mass or less, especially preferably 10 parts by mass or less.
The thermoplastic polymer composition to be used in the invention may include an antioxidant, lubricant, light stabilizer, processing aid, colorant such as a pigment or a dye, flame retardant, antistatic agent, matting agent, antiblocking agent, ultraviolet absorber, release agent, blowing agent, antibacterial agent, fungicide, perfume, etc. according to need so long as the effects of the invention are not lessened thereby.
Examples of the antioxidant include hindered phenol type, phosphorus type, lactone type, and hydroxyl type antioxidants. Preferred of these are hindered phenol type antioxidants. In the case where an antioxidant is included, it is preferable that the content thereof should be in such a range that the thermoplastic polymer composition to be obtained does not take a color when melt-kneaded. The content thereof is preferably 0.1 to 5 parts by mass per 100 parts by

mass of the block copolymer (A).

(Process for Producing the Thermoplastic Polymer Composition)

Processes for preparing the thermoplastic polymer composition are not particularly limited, and the composition may be prepared by any method capable of evenly mixing the ingredients. Usually, a melt-kneading method is used. The melt-kneading can be conducted using a melt-kneading device such as, for example, a single-screw extruder, twin-screw extruder, kneader, batch mixer, roller mill, Banbury mixer, or the like. Usually, the thermoplastic polymer composition can be obtained by melt-kneading the ingredients preferably at 170 to 270°C.

The thermoplastic polymer composition thus obtained has a hardness as measured by JIS K 6253, JIS-A method (hereinafter often referred to as "hardness A") of preferably 90 or less, more preferably 30 to 90, even more preferably 35 to 85. In case where the hardness A thereof is too high, this composition is less apt to have flexibility, elasticity, and mechanical properties and tends to be less suitable for use as a thermoplastic polymer composition having excellent adhesiveness to synthetic resins, in particular, resins containing inorganic fillers (e.g., glass fibers), and to ceramics and metals.

The melt flow rate (MFR) of the thermoplastic polymer composition, as measured by the method according to JIS K 7210 under the conditions of 230°C and a load of 2.16 kg (21.18 N), is in the range of preferably 1 to 300 g/10 min, more preferably 1 to 200 g/10 min, even more preferably 5 to 150 g/10 min, especially preferably 10 to 40 g/10 min. In cases when the MFR thereof is within this range, it is easy to produce fibers from the thermoplastic polymer composition.

From the standpoint of producing fibers, the thermoplastic polymer composition has a viscosity ratio $\eta(0.1)/\eta(10)$ at the molding temperature of preferably 1 to 20, more preferably 1 to 10, even more preferably 1 to 5, especially preferably 1 to 2. Symbols $\eta(0.1)$ and $\eta(10)$ are complex viscosities at frequencies of 0.1 and 10 Hz, respectively, measured when the composition is examined for frequency dependence using a shearing type dynamic viscoelastometer at a constant temperature while applying a strain of 5%.

[Fiber]

The thermoplastic polymer composition thus obtained can be formed into a fiber by melt spinning. When the composition is subjected to melt spinning, this spinning can be mixed spinning or conjugate spinning with another thermoplastic polymer. The melt spinning device to be used here may be one which is substantially the same as any of the devices in use for melt-spinning thermoplastic polymers such as polyamides, polyesters, polyolefins, polyvinyl chloride, and polyvinylidene chloride. For example, the melt-spinning device may be of the type including a screw extruder and a gear pump connected thereto. The denier configuration of the fiber to be produced can be variously changed by regulating the spinning temperature, spinning-dope extrusion pressure, extrusion rate, spinneret hole diameter, and taking-up speed. This respect is the same as in the case of the melt spinning for producing ordinary synthetic fibers. It is, however, desirable that either an aqueous solution of a surfactant or the aqueous solution in which finely powdered talc, calcium carbonate, or the like has been dispersed should be applied to the spun fibers which have not been taken up, in order to prevent the fibers from sticking to each other after taking-up. The spinning temperature is usually preferably in the range of 180 to 350°C, and the spinning draft is generally preferably in the range of 5 to 200. The taking-up speed is generally preferably in the range of 20 to 1,000 m/min.

The fiber which has been thus taken up may be stretched as in the case of ordinary thermoplastic synthetic fibers, but need not be stretched. Furthermore, steps such as, for example, heat treatment can be omitted. Consequently, the fiber formation step is exceedingly simple and economical.

The thickness of the fiber obtained by the invention is several deniers or larger as in the case of ordinary thermoplastic synthetic fibers. Any thickness can be selected from among these. Consequently, the fiber can be utilized not only as multifilaments or monofilaments but as staples. With respect to the cross-sectional shape of the fiber obtained, the cross-section may be any of the ordinary round cross-section and other cross-sections including a flat cross-section, polygonal cross-section, multi-leafed cross-section, and hollow cross-section. In the case where the fiber is a conjugate fiber, the cross-sectional shape thereof may be any of the concentric core/sheath type, eccentric core/sheath type, multicore/sheath type, bimetal type, multilayer stack type, and the like. In the case of conjugate spinning or mixed spinning, it is preferable, from the standpoint of imparting adhesiveness and flexibility, that the proportion of the thermoplastic polymer composition to all the polymers for constituting the fibers should be 40% by mass or higher.

[Fabric]

The fabric of the invention is configured of fibers including the above-described fiber as a main component. Other fibers may be mixed therewith so long as the effects of the invention are not lessened thereby.

Methods for using the fiber of the invention to obtain a fabric are not particularly limited, and a known technique can be utilized. There are a method in which spun yarns, continuous yarns, or the like is used to obtain a knit fabric or woven fabric by knitting or weaving and a method in which a nonwoven fabric is obtained using such yarns. Of these, the method of obtaining a nonwoven fabric is preferred from the standpoints of production efficiency, etc.

As general methods for nonwoven-fabric production, known methods can be employed, such as dry processes, e.g., carding and airlaying, wet processes, or the processes generally called direct processes, such as spunbonding and melt-blowing. For the nonwoven fabric according to the invention, any of those known methods may be used so long as the objects of the invention are accomplished. Usually, in cases when an elastomer resin is used to obtain filaments by ordinary melt spinning, it is necessary to set special conditions. However, in the case of obtaining the nonwoven fabric according to the invention, not only such setting is unnecessary but also the melt-blowing process is suitable therefor since the resin has the property of being low in melt viscosity and having excellent melt flowability. Incidentally, with respect to methods for spinning by the melt-blowing process, basic devices and methods are disclosed, for example, in Industrial and Engineering Chemistry, Vol.48, No.8 (pp. 1342-1346), 1956, and these known methods can be used to produce the nonwoven fabric.

Namely, the thermoplastic polymer composition which has been melted using an extruder is led to a die for melt-blowing and extruded as fine resin flows. The die for melt-blowing is configured so that a heated gas can be introduced thereinto at a high velocity. By bringing this heated gas into contact with the resin flows, the resin flows are drawn and stretched in the molten state to form discontinuous fibers having a small fiber diameter. These discontinuous fibers are accumulated on a porous support and taken up, thereby obtaining a melt-blown nonwoven fabric.

In the case of employing the melt-blowing process in the invention, it is desirable to conduct the melt-blowing at a resin melt temperature of generally 200 to 380°C, in particular, 220 to 330°C. In case where the melt temperature is lower than that range, the melt viscosity is so high that it is difficult to fine the resin flows with the high-velocity heated gas and this may result in cases where the nonwoven fabric obtained is considerably coarse. Meanwhile, in case where the melt temperature is higher than that range, the resin has a considerably reduced melt viscosity and this may arouse troubles that it is impossible to conduct spinning which is accompanied with good drawing and that the resin is thermally decomposed to have a reduced molecular weight, resulting in a nonwoven fabric with reduced mechanical properties.

It is preferable that the temperature of the heated gas should be higher by at least about 10°C than the melt temperature of the resin. It is desirable that the temperature thereof should be in the range of 210 to 390°C, in particular, 230 to 340°C. It is desirable that the flow velocity of the heated gas is generally about 100 to 600 m/sec, in particular, about 200 to 400 m/sec. As the high-velocity heated gas, heated air is generally used from the standpoint of cost. However, a heated inert gas may be used in order to prevent resin deterioration.

The distance between the die for melt-blowing and the porous support is important from the standpoints of the dispersibility of single fibers and improving the strength of the nonwoven fabric by bonding the single fibers to one another by thermal self-bonding. From these standpoints, the distance is preferably short, and is preferable 70 cm or less, more preferably 50 cm or less.

For the purpose of mitigating the surface stickiness of the nonwoven fabric of the invention, polymethyl methacrylate or the like may be added to the resin to be used. Furthermore, various additives such as, for example, an antioxidant, nucleating agent, neutralizer, lubricant, antiblocking agent, dispersant, flowability improver, release agent, colorant, and filler is added so long as the incorporation thereof does not defeat the objects of the invention. Methods for mixing these additives are not particularly limited, and examples thereof include a method in which the additives are blended as chips during spinning and a method in which use is made of chips obtained beforehand by melt-mixing a plurality of additives with the resin to be used.

The fabric weight of the fabric, e.g., nonwoven fabric, of the invention to be obtained by the method described above and the average diameter of the fibers which constitute the fabric, e.g., nonwoven fabric, may be set in accordance with the intended use thereof. However, the fabric weight thereof is preferably 5 to 150 g/m$^2$, especially preferably in the range of 10 to 100 g/m$^2$. So long as the fabric weight thereof is 5 g/m$^2$ or larger, this fabric is easy to produce and troubles such as that the fabric itself has poor evenness in thickness are less apt to arise. So long as the fabric weight thereof is 150 g/m$^2$ or less, a reduction in thickness can be attained when this fabric is used as an adhesive layer. Although the average fiber diameter thereof is not particularly limited, 1 to 30 $\mu$m is preferred. So long as the average fiber diameter thereof is 1 $\mu$m or larger, excellent mass-production stability is attained, for example, because fiber breakage is less apt to occur during spinning. So long as the average fiber diameter thereof is 30 $\mu$m or less, a fabric having sufficient denseness and strength is obtained.

The strength of the fabric of the invention is not particularly limited. However, strength values of 2 N/5 cm$^2$ and higher are preferred. The strength is an average value determined by a method in which the same specimens as those used for basis weight measurement are examined with Autograph, manufactured by Shimadzu Corp., in accordance with JIS L 1906 to measure the rupture strength thereof at three points with respect to each of the machine direction and the transverse direction and the measured strength values are averaged. Although the fabric of the invention may be in a net form, it is preferable that the network should be dense. Denseness is measured in terms of air permeability,

and the air permeability of the fabric is preferably 700 cc/cm$^2$/s or less, more preferably 300 cc/cm$^2$/s or less. In cases when the air permeability thereof is less than 700 cc/cm$^2$/s, the denseness is high and, when the fabric of the invention is used as an adhesive layer, a reduction in adhesive-layer thickness can be attained and unevenness in bonding strength can be reduced.

The fabric of the invention obtained by the method described above exhibits excellent adhesiveness regardless of the materials of the members to be bonded, and is hence suitable for use in various applications where such properties are required. The fabric can be used also as a nonslip layer or as adhesive layers in various layer products.

As methods for bonding, use can be made of general thermal bonding methods such as air-pressure forming, vacuum forming, press molding, calendering, and thermal laminating. For example, a method is preferred in which the fabric of the invention obtained by the method described above is interposed between members to be bonded (e.g., metals such as aluminum, resin films, resin foam, woven fabrics, etc.) and the resultant assemblage is thermally laminated by means of a hot laminator or the like.

The average thickness of the adhesive layer obtained by the method described above is preferably 10 to 100 μm, more preferably 30 to 70 μm. In cases when the average thickness of the adhesive layer is 10 μm or larger, not only good peel strength is obtained but also bonding failures are diminished. Meanwhile, in cases when the thickness of the adhesive layer is 100 μm or less, not only this adhesive layer is effective in reducing the weight and size of the composite but also good shear tensile strength is obtained.

The fiber and the fabric obtained using the fabric, which are provided by the invention, can easily and tenaciously bond polar resins, resins containing inorganic fillers (in particular, glass fibers), ceramics, glasses, metals, or the like without requiring priming. In addition, the fibrous network of the fabric is destroyed during the thermal press bonding and the fabric thus comes into a sheet form. As a result, a thin adhesive layer which has not been obtained by sheet formation by extrusion can be formed. Furthermore, since the air which came in when the adherends and the fabric were stacked smoothly goes away through interstices among the fibers, bonding failures due to air trapping can be inhibited from occurring. The fabric is hence useful as an adhesive for weight, size, and cost reductions in members and for large-area bonding. The fabric can be used not only in clothing applications but in various fields such as daily goods, packaging materials, industrial supplies, and food-related supplies, so as to take advantage of those properties. For example, the fabric can be used for bonding members for electronic/electrical appliances, OA apparatus, domestic electrical appliances, and motor vehicles. Moreover, the fabric is useful for forming bonded structures such as, for example, the joint part of a window in motor vehicles or buildings where a glass is jointed with an aluminum sash or with the metallic frame surrounding an opening, etc., the connecting part of a solar cell module or the like where a glass is connected to a metallic frame, etc.

[Examples]

The invention will be explained below in more detail by reference to Examples, etc., but the invention should not be construed as being limited to the following Examples in any way.

The ingredients used in the following Examples and Comparative Example are as follows.

[Block Copolymer (A1-1)]

Into a dried pressure vessel which purged with nitrogen were introduced 64 L of cyclohexane as a solvent and 0.15 L of sec-butyllithium (10% by mass cyclohexane solution) as an initiator, followed by 0.3 L of tetrahydrofuran (15 equivalents to the lithium atoms in the initiator) as an organic Lewis base. After heated to 50°C, 2.3 L of styrene was added and polymerized for 3 hours. Subsequently, 23 L of isoprene was added and polymerized for 4 hours, and 2.3 L of styrene was further added and polymerized for 3 hours. The liquid reaction mixture obtained was poured into 80 L of methanol, and the solid precipitated was taken out by filtration and dried at 50°C for 20 hours, thereby obtaining a triblock copolymer of polystyrene/polyisoprene/polystyrene.

Subsequently, 10 kg of the triblock copolymer of polystyrene/polyisoprene/polystyrene was dissolved in 200 L of cyclohexane, and palladium-carbon (deposited-palladium amount: 5% by mass) was added as a hydrogenation catalyst in an amount of 5% by mass based on the copolymer. Reaction was made for 10 hours under the conditions of a hydrogen pressure of 2 MPa and 150°C. After cooling and releasing from the pressure, the palladium-carbon was removed by filtration, and the filtrate was concentrated and vacuum-dried, thereby obtaining a product of hydrogenation of the triblock copolymerof polystyrene/polyisoprene/polystyrene (the hydrogenated product is hereinafter referred to as block copolymer (A1-1)). The block copolymer (A1-1) obtained had a weight-average molecular weight of 130,000, and the polystyrene blocks had a weight-average molecular weight per block of 8,100. The block copolymer (A1-1) had a styrene content of 21% by mass, a degree of hydrogenation of 85%, and a molecular-weight distribution of 1.04. The content of 1,4-bonds in the polyisoprene block was 45% by mole.

[Block Copolymer (A1-2)]

The same procedure as for block copolymer (A1-1) was conducted, except that the initiator amount, the styrene amount, and the kind and amount of the conjugated diene were changed. Thus, a triblock copolymer of polystyrene/poly(isoprene/butadiene)/polystyrene and having an isoprene/butadiene of 50/50 (molar ratio) was obtained.

Subsequently, hydrogenation reaction was conducted in the same manner as for block copolymer (A1-1) to obtain a product of hydrogenation of the triblock copolymer of polystyrene/poly(isoprene/butadiene)/polystyrene (the hydrogenated product is hereinafter referred to as block copolymer (A1-2)). The block copolymer (A1-2) obtained had a weight-average molecular weight of 190,000, and the polystyrene blocks had a weight-average molecular weight per block of 9,300. The block copolymer (A1-2) had a styrene content of 12% by mass, a degree of hydrogenation of 88%, and a molecular-weight distribution of 1.11. The total content of isoprene-derived 1,4-bonds and butadiene-derived 1,4-bonds in the poly(isoprene/butadiene) block was 40% by mole.

[Block Copolymer (A1-3)]

The same procedure as for block copolymer (A1-1) was conducted, except that the initiator amount, the styrene amount, and the conjugated diene amount were changed. Thus, a triblock copolymerof polystyrene/polyisoprene/polystyrene was obtained.

Subsequently, hydrogenation reaction was conducted in the same manner as for block copolymer (A1-1) to obtain a product of hydrogenation of the triblock copolymer of polystyrene/polyisoprene/polystyrene (the hydrogenated product is hereinafter referred to as block copolymer (A1-3)). The block copolymer (A1-3) obtained had a weight-average molecular weight of 70,000, and the polystyrene blocks had a weight-average molecular weight per block of 7,800. The block copolymer (A1-3) had a styrene content of 30% by mass, a degree of hydrogenation of 90%, and a molecular-weight distribution of 1.04. The content of 1,4-bonds in the polyisoprene block was 40% by mole.

[Block Copolymer (A1-4)]

The same procedure as for block copolymer (A1-1) was conducted, except that the initiator amount, the styrene amount, and the kind and amount of the conjugated diene were changed. Thus, a triblock copolymer of polystyrene/poly(isoprene/butadiene)/polystyrene and having an isoprene/butadiene of 50/50 (molar ratio) was obtained.

Subsequently, hydrogenation reaction was conducted in the same manner as for block copolymer (A1-1) to obtain a product of hydrogenation of the triblock copolymer of polystyrene/poly(isoprene/butadiene)/polystyrene (the hydrogenated product is hereinafter referred to as block copolymer (A1-4)). The block copolymer (Al-4) obtained had a weight-average molecular weight of 180,000, and the polystyrene blocks had a weight-average molecular weight per block of 5,000. The block copolymer (A1-4) had a styrene content of 8% by mass, a degree of hydrogenation of 95%, and a molecular-weight distribution of 1.04. The total content of isoprene-derived 1,4-bonds and butadiene-derived 1,4-bonds in the poly(isoprene/butadiene) block was 40% by mole.

[Block Copolymer (A2-1)]

The same procedure as for block copolymer (Al-1) was conducted, except that the tetrahydrofuran as an organic Lewis base was omitted and that the initiator amount, the styrene amount, and the isoprene amount were changed. Thus, a triblock copolymer of polystyrene/polyisoprene/polystyrene was obtained.

Subsequently, hydrogenation reaction was conducted in the same manner as for block copolymer (A1-1) to obtain a product of hydrogenation of the triblock copolymer of polystyrene/polyisoprene/polystyrene (the hydrogenated product is hereinafter referred to as block copolymer (A2-1)). The block copolymer (A2-1) obtained had a weight-average molecular weight of 48,000, and the polystyrene blocks had a weight-average molecular weight per block of 4,900. The block copolymer (A2-1) had a styrene content of 30% by mass, a degree of hydrogenation of 97%, and a molecular-weight distribution of 1.04. The content of 1,4-bonds in the polyisoprene block was 93% by mole.

[Block Copolymer (A2-2)]

Into a dried pressure vessel which purged with nitrogen were introduced 80 L of cyclohexane as a solvent and 0.50 L of sec-butyllithium (10% by mass cyclohexane solution) as an initiator. After heated to 50°C, 2.7 L of styrene was added and polymerized for 3 hours. Subsequently, a liquid mixture of 10.8 L of isoprene and 8.8 L of butadiene was added and polymerized for 4 hours, and 2.7 L of styrene was further added and polymerized for 3 hours. Next, gaseous ethylene oxide was bubbled into the reaction vessel through a lower part thereof. The resultant liquid reaction was poured into 80 L of methanol, and the solid precipitated was taken out by filtration and dried at 50°C for 20 hours, thereby

obtaining a triblock copolymer of polystyrene/poly(isoprene/butadiene)/polystyrene.

Subsequently, 20 kg of the triblock copolymer of polystyrene/poly(isoprene/butadiene)/polystyrene was dissolved in 200 L of cyclohexane, and a Ziegler type hydrogenation catalyst prepared beforehand so as to have an aluminum/nickel molar ratio of 3/1 was added as a hydrogenation catalyst in an amount of 400 ppm of the copolymer. Reaction was made for 5 hours under the conditions of a hydrogen pressure of 1 MPa and 80°C. Thereafter, hydrogen peroxide and oxalic acid were added, and this mixture was stirred. Water was then added to the reaction solution to wash the solution and remove the hydrogenation catalyst. The solution obtained was concentrated and vacuum-dried, thereby obtaining a product of hydrogenation of the triblock copolymer of polystyrene/poly(isoprene/butadiene)/polystyrene (the hydrogenated product is hereinafter referred to as block copolymer (A2-2)). The block copolymer (A2-2) obtained had a weight-average molecular weight of 53,000, and the polystyrene blocks had a weight-average molecular weight per block of 4,500. The block copolymer (A2-2) had a styrene content of 30% by mass, a degree of hydrogenation of 98%, and a molecular weight distribution of 1.04. The total content of isoprene-derived 1,4-bonds and butadiene-derived 1,4-bonds in the poly(isoprene/butadiene) block was 92% by mole. Furthermore, the block copolymer (A2-2) obtained had a hydroxy group introduced into one end thereof, and the degree of hydroxy introduction per molecule was 0.96 (calculated through $^1$H-NMR).

Polyvinyl acetal Resin (B-1):

n-Butyraldehyde and 35% aqueous hydrochloric acid solution were added to an aqueous solution of polyvinyl alcohol having an average degree of polymerization of 500 and a degree of saponification of 99% by mole, and the soulution was stirred to conduct acetalization reaction, thereby precipitating a resin. This resin was washed by a known method until pH=6 was reached. Subsequently, the resin was suspended in an alkaline aqueous medium and post-treatment was performed with stirring. The treated resin was washed until pH=7 was reached, and was then dried until the volatile content decreased to 0.3% or less. Thus, polyvinyl acetal resin (B-1) having a degree of acetalization of 80% by mole was obtained.

Polyvinyl acetal Resin (B-2):

Using polyvinyl alcohol having an average degree of polymerization of 300 and a degree of saponification of 99% by mole, the same procedure as for polyvinyl acetal resin (B-1) was conducted. Thus, polyvinyl acetal resin (B-2) having a degree of acetalization of 72% by mole was obtained.

Compatibilizing Agent (C-1):

Elvaloy AC1820AC, manufactured by Du Pont-Mitsui Polychemicals Co., Ltd. (ethylene/methyl acrylate copolymer resin; MA content, 20 wt%; MFR = 8 g/10 min)

Compatibilizing Agent (C-2):

Forty-two grams of polypropylene "Prime Polypro F327" (manufactured by Prime Polymer Co., Ltd.), 160 mg of maleic anhydride, and 42 mg of 2,5-dimethyl-2,5-di(tert-butylperoxy)hexane were melt-kneaded with a batch mixer under the conditions of 180°C and a screw rotation speed of 40 rpm. The kneaded mixture obtained (polar-group-containing polypropylene-based resin (C-2)) had an MFR [230°C; load, 2.16 kg (21.18 N)] of 6 g/10 min, a maleic anhydride concentration of 0.3%, and a melting point of 138°C.

The maleic anhydride concentration is a value obtained by titrating the obtained kneaded mixture using a methanol solution of potassium hydroxide; the same applies hereinafter. The melting point is a value read from the endothermic peak of a differential scanning calorimetry curve obtained during heating at 10 °C/min; the same applies hereinafter.

Compatibilizing Agent (C-3):

Forty-two grams of polypropylene "Novatec-PP EG7F" (manufactured by Japan Polypropylene Corp.), 160 mg of maleic anhydride, and 42 mg of 2,5-dimethyl-2,5-di(tert-butylperoxy)hexane were melt-kneaded with a batch mixer under the conditions of 180°C and a screw rotation speed of 40 rpm. The kneaded mixture obtained (polar-group-containing polypropylene-based resin (C-3)) had an MFR [230°C; load, 2.16 kg (21.18 N)] of 3 g/10 min, a maleic anhydride concentration of 0.3%, and a melting point of 140°C.

Compatibilizing Agent (C-4):

Forty-two grams of polypropylene "Novatec-PP FG3DE" (manufactured by Japan Polypropylene Corp.), 160 mg of maleic anhydride, and 42 mg of 2,5-dimethyl-2,5-di(tert-butylperoxy)hexane were melt-kneaded with a batch mixer under the conditions of 180°C and a screw rotation speed of 40 rpm. The kneaded mixture obtained (polar-group-containing polypropylene-based resin (C-4)) had an MFR [230°C; load, 2.16 kg (21.18 N)] of 10 g/10 min, a maleic anhydride concentration of 0.3%, and a melting point of 143°C.

<Production Example for Thermoplastic Polymer Compositions>

Compositions each obtained by mixing the ingredients in the proportion (mass ratio) shown in Table 1 were each melt-kneaded using a twin-screw extruder under the conditions of 230°C and a screw rotation speed of 200 rpm, subsequently melt-extruded into strands, and pelletized with a strand cutter.

<Production of Fibers and Nonwoven Fabrics>

[Example 1]

Pellets of the composition prepared in accordance with the recipe shown in Table 1 were melted with an extruder and then introduced into a 300°C die. A melt-blowing spinning device in which orifices having a diameter of 0.3 mm had been arranged at a pitch of 1 mm and which, on each of both sides of the orifices, had a slit for heated-gas ejection was used to eject the polymer at an ejection rate of 0.4 g/min per hole, and air heated to 300°C was ejected at a hot-air flow rate of 4 $Nm^3$/min per 1-m width to fine the ejected polymer. The resultant fibers were collected on a wire mesh conveyor belt disposed under the nozzle at a distance of 15 cm therefrom, and were taken off with a winder disposed thereafter, thereby obtaining nonwoven fabric 1. The nonwoven fabric 1 obtained had a fabric weight of 50 $g/m^2$, a filament diameter (average fiber diameter) of 4 $\mu$m, and a film thickness of about 40 $\mu$m.

[Examples 2 to 15]

The compositions prepared in accordance with the recipes shown in Table 1 were used to obtain nonwoven fabrics 2 to 15 in the same manner as in Example 1, except that the ejection rate and the hot-air flow rate were changed. The conditions and the properties are shown in Table 1.

<Production of Sheet>

[Comparative Example]

Pellets of the composition prepared in accordance with the recipe shown in Table 1 were introduced into the hopper of a single-screw extruder in which the cylinder temperature and the die temperature had been set at 190°C and the screw rotation speed had been set at 60 rpm, and a sheet of Comparative Example having a width of about 30 cm and a thickness of about 200 $\mu$m was obtained using a T-die attached to the end of the die.

<Measurement of Hardness>

The thermoplastic polymer compositions produced in the Examples and Comparative Example were each extruded into a ribbon shape. Sheets of each ribbon were stacked to a thickness of 6 mm and examined for hardness A with a type A durometer according to JIS K 6253.

<Measurement of Melt Flow Rate (MFR)>

The thermoplastic polymer compositions produced in the Examples and Comparative Example were each examined for MFR (unit: g/10 min) by the method according to JIS K 7210 under the conditions of 230°C and a load of 2.16 kg (21.18 N).

<Measurement of Viscosity Ratio>

The thermoplastic polymer compositions produced in the Examples and Comparative Example were each extruded into a ribbon shape, and a disk having a diameter of 25 mm and a thickness of 1 mm was cut out thereof. This

disk was examined for the frequency dependence of complex viscosity using a shearing type dynamic viscoelastometer at 300°C in the presence of a strain of 5%. A viscosity ratio $\eta(0.1)/\eta(10)$ was calculated therefrom.

<Average Fiber Diameter (μm)>

An arbitrary point in each nonwoven fabric was photographed with a scanning electron microscope at a magnification of 1,000 diameters to measure the diameters of 100 fibers. The average value of these measured values was taken as the average fiber diameter.

<Fabric Weight (g/m$^2$)>

In accordance with JIS L 1906, three specimens having length and width dimensions of 20 cm × 20 cm were taken out per m of the width of each nonwoven fabric, and the mass of each specimen was measured with an electronic force balance. The average of the three values was divided by the specimen area of 400 cm$^2$ to calculate the mass per unit area. This mass was taken as the fabric weight of the nonwoven fabric.

<Air Permeability (cc/cm$^2$/sec)>

In accordance with JIS L 1096, 6.27.1 (method A: Frazir method), nonwoven fabrics 1 to 15 and the sheet which each had the same size as in the fabric weight measurement were used as specimens. Each specimen was examined using an air permeability tester (FX3300, manufactured by TEXTEST (Switzerland)) under the conditions of a measuring area of 38 cm$^2$ and a measuring pressure of 125 Pa. The average of three measured values was taken as the air permeability of each of the nonwoven fabrics 1 to 15 and sheet. In Table 1, the case where the air permeability was more than 1,000 (cc/cm$^2$/sec) are indicated by "1000<".

<Appearance Evaluation>

The nonwoven fabrics obtained were visually examined. The nonwoven fabrics which had a fine texture like Japanese paper were rated as good, while the case where the nonwoven fabric had a coarse texture and interstices were observed therein was rated as netty.

<Simplified Evaluation of Adhesiveness>

Each of the A4-size nonwoven fabrics 1 to 15 and sheet obtained in Examples 1 to 15 and Comparative Example was sandwiched between an aluminum foil having a thickness of 12 μm and a PET film having a thickness of 50 μm and stacked therewith using a hot laminator having a roll width of 700 mm (Type VAII-700, manufactured by Taisei Laminator Co., Ltd.) under the conditions of 200°C, a rotation speed of 0.2 m/min, and a roll pressure of 0.6 MPa. The aluminum foil and PET film of each layer product obtained were peeled off by hand at each of the measuring temperatures (23°C, 0°C), and the adhesiveness was evaluated in five grades in accordance with the peeled state. The results thereof are shown in Table 1.

(Evaluation Criteria)

5: Neither the aluminum foil nor the PET film is unable to be peeled off.
4: Intermediate between grade 3 and grade 5.
3: Either the aluminum foil or the PET film is unable to be peeled off but the other is able to be comparatively easily peeled off.
2: Intermediate between grade 1 and grade 3.
1: Both the aluminum foil and the PET film are able to be easily peeled off by hand.

<Production of Layer Products with Glass Plate>

Both surfaces of a glass plate having dimensions of 75 mm (length) × 25 mm (width) × 1 mm (thickness) were cleaned using an aqueous surfactant solution, methanol, acetone, and distilled water in this order as cleaning liquids, and dried. This glass plate, each of the nonwoven fabrics and sheet produced in the Examples and Comparative Example given above, and a polyethylene terephthalate (PET) sheet having a thickness of 50 μm were stacked in this order. This

stack was disposed in the center of a metallic spacer having outer dimensions of 200 mm × 200 mm, inner dimensions of 150 mm × 150 mm, and a thickness of 1 mm.

This stack, which was configured of the glass plate, the nonwoven fabric or sheet, and the PET sheet, was sandwiched together with the metallic spacer between sheets of polytetrafluoroethylene and further sandwiched between metal plates from outside, and was compression-molded for 3 minutes using a compression molding machine at 160°C under a load of 20 kgf/$cm^2$ (2 N/$mm^2$). Thus, a layer product of PET/(nonwoven fabric or sheet)/glass plate was obtained.

<Production of Layer Products with Aluminum Plate>

The same procedure as in Production of Layer Products with Glass Plate described above was conducted, except that both surfaces of an aluminum plate having dimensions of 75 mm (length) × 25 mm (width) × 1 mm (thickness) were cleaned using an aqueous surfactant solution and distilled water in this order as cleaning liquids and dried. Thus, a layer product of PET/(nonwoven fabric or sheet)/aluminum plate was obtained.

<Measurement of Bonding Strength>

The layer products of PET/(nonwoven fabric or sheet)/glass plate and layer products of PET/(nonwoven fabric or sheet)/aluminum plate produced above were examined for peel strength between the nonwoven-fabric or sheet layer and the glass plate and between the nonwoven-fabric or sheet layer and the aluminum plate, respectively, in accordance with JIS K 6854-2 under the conditions of a peel angle of 180° and a pulling speed of 50 mm/min and under the temperature conditions shown in Table 1 (23°C, 0°C, -40°C). The case where the nonwoven fabric had embrittled and broke during the peeling is indicated by "material breakage".

Table 1

| | Example 1 | Example 2 | Example 3 | Example 4 | Example 5 | Example 6 |
|---|---|---|---|---|---|---|
| Composition | | | | | | |
| Block copolymer (A) | | | | | | |
| A1-1 | 100 | | | | | 50 |
| A1-2 | | 100 | | | | |
| A1-3 | | | 100 | | | |
| A1-4 | | | | 100 | | |
| A2-1 | | | | | 100 | 50 |
| A2-2 | | | | | | |
| Polyvinyl acetal (B-1) | 20 | 10 | 20 | 20 | 35 | 35 |
| Polyvinyl acetal (B-2) | | | | | | |
| Compatibilizing agent (C) | | | | | | |
| C-1 | | | | | 50 | |
| C-2 | 25 | 50 | 25 | 25 | | 50 |
| C-3 | | | | | | |
| C-4 | | | | | | |
| Hardness | 76 | 81 | 87 | 72 | 85 | 83 |
| MFR (230°C, 2.16 kg) | 4 | 3.7 | 20 | 19 | 50 | 9 |
| Viscosity ratio $\eta(0.1)/\eta(10)$ | 22 | 22 | 18 | 1.8 | 1.3 | 20 |
| Ejection rate (g/min) | 0.4 | 0.4 | 0.3 | 0.3 | 0.4 | 0.4 |
| Hot-air flow rate ($Nm^3$/min) | 4 | 4 | 13 | 13 | 4 | 4 |
| Nonwoven fabric/ sheet | nonwoven fabric 1 | nonwoven fabric 2 | nonwoven fabric 3 | nonwoven fabric 4 | nonwoven fabric 5 | nonwoven fabric 6 |
| Fabric weight ($g/m^2$) | 50 | 30 | 50 | 50 | 50 | 70 |
| Average fiber diameter (μm) | 4 | 2.5 | 3.5 | 3.5 | 5 | 5 |
| Air permeability ($cc/cm^2/s$) | 1000< | 1000< | 240 | 235 | 100 | 1000< |
| Appearance | netty | netty | good | good | good | netty |
| Thickness of adhesive layer (μm) | 40 | 50 | 50 | 50 | 50 | 50 |
| Simplified evaluation of adhesiveness, 23°C | 5 | 5 | 5 | 5 | 2 | 2 |
| Simplified evaluation of adhesiveness, 0°C | 2 | 2 | 2 | 2 | 2 | 3 |
| Glass bonding strength [N/25 mm] 23°C | 49 | 25 | 60 | 60 | 20 | 20 |
| Aluminum bonding strength [N/25 mm] 23°C | 76 | 35 | 60 | 60 | 20 | 20 |
| Aluminum bonding strength [N/25 mm] 0°C | material breakage | material breakage | material breakage | material breakage | 20 | 40 |
| Aluminum bonding strength [N/25 mm] -40°C | material breakage | material breakage | material breakage | material breakage | 20 | 100 |

Table 1 (Continued)

| | Example 7 | Example 8 | Example 9 | Example 10 | Example 11 | Example 12 |
|---|---|---|---|---|---|---|
| Composition | | | | | | |
| Block copolymer (A) | | | | | | |
| A1-1 | 40 | | | | | |
| A1-2 | | 50 | 50 | | | |
| A1-3 | | | | 75 | 50 | 50 |
| A1-4 | | | | | | |
| A2-1 | 60 | | | 25 | 50 | 50 |
| A2-2 | | 50 | 50 | | | |
| Polyvinyl acetal (B-1) | 7.5 | 20 | 20 | 20 | 20 | |
| Polyvinyl acetal (B-2) | | | | | | 20 |
| Compatibilizing agent (C) | | | | | | |
| C-1 | | | | | | |
| C-2 | 10 | 25 | | 25 | 25 | 25 |
| C-3 | | | 25 | | | |
| C-4 | | | | | | |
| Hardness | 80 | 76 | 74 | 86 | 86 | 81 |
| MFR (230°C, 2.16 kg) | 27 | 5.7 | 3 | 22 | 22 | 28 |
| Viscosity ratio $\eta(0.1)/\eta(10)$ | 3.0 | 17 | 21 | 15 | 13 | 14 |
| Ejection rate (g/min) | 0.4 | 0.4 | 0.4 | 0.3 | 0.3 | 0.3 |
| Hot-air flow rate ($Nm^3$/min) | 6 | 4 | 4 | 13 | 13 | 13 |
| Nonwoven fabric/ sheet | nonwoven fabric 7 | nonwoven fabric 8 | nonwoven fabric 9 | nonwoven fabric 10 | nonwoven fabric 11 | nonwoven fabric 12 |
| Fabric weight ($g/m^2$) | 50 | 70 | 50 | 50 | 50 | 50 |
| Average fiber diameter ($\mu$m) | 4 | 6 | 5 | 3.5 | 3.5 | 3.5 |
| Air permeability ($cc/cm^2/s$) | 550 | 1000< | 1000< | 250 | 219 | 230 |
| Appearance | good | netty | netty | good | good | good |
| Thickness of adhesive layer ($\mu$m) | 50 | 50 | 50 | 50 | 50 | 50 |
| Simplified evaluation of adhesiveness, 23°C | 2 | 5 | 3 | 5 | 5 | 3 |
| Simplified evaluation of adhesiveness, 0°C | 3 | 5 | 3 | 5 | 5 | 5 |
| Glass bonding strength [N/25 mm] 23°C | 28 | 45 | 30 | 45 | 40 | 30 |
| Aluminum bonding strength [N/25 mm] 23°C | 27 | 50 | 30 | 40 | 40 | 30 |
| Aluminum bonding strength [N/25 mm] 0°C | 50 | 100 | 40 | 150 | 100 | 100 |
| Aluminum bonding strength [N/25 mm] -40°C | 100 | 150 | 100 | material breakage | 100 | 100 |

Table 1 (Continued)

| | Example 13 | Example 14 | Example 15 | Comparative Example |
|---|---|---|---|---|
| Composition | | | | |
| Block copolymer (A) | | | | |
| A1-1 | | | | 100 |
| A1-2 | | | | |
| A1-3 | 50 | | | |
| A1-4 | | 50 | 50 | |
| A2-1 | 50 | 50 | 50 | |
| A2-2 | | | | |
| Polyvinyl acetal (B-1) | 20 | 20 | | 20 |
| Polyvinyl acetal (B-2) | | | 20 | |
| Compatibilizing agent (C) | | | | |
| C-1 | | | | |
| C-2 | | 25 | | 25 |
| C-3 | | | | |
| C-4 | 25 | | 25 | |
| Hardness | 83 | 75 | 75 | 76 |
| MFR (230°C, 2.16 kg) | 30 | 20 | 23 | 4 |
| Viscosity ratio $\eta(0.1)/\eta(10)$ | 17 | 1.4 | 1.6 | 22 |
| Ejection rate (g/min) | 0.3 | 0.3 | 0.3 | - |
| Hot-air flow rate ($Nm^3/min$) | 13 | 13 | 13 | - |
| Nonwoven fabric/ sheet | nonwoven fabric 13 | nonwoven fabric 14 | nonwoven fabric 15 | sheet |
| Fabric weight ($g/m^2$) | 50 | 50 | 50 | - |
| Average fiber diameter (μm) | 3.5 | 3.5 | 3.5 | - |
| Air permeability ($cc/cm^2/s$) | 240 | 280 | 260 | 0 |
| Appearance | good | good | good | - |
| Thickness of adhesive layer (μm) | 50 | 50 | 50 | 200 |
| Simplified evaluation of adhesiveness, 23°C | 5 | 5 | 5 | 5 |
| Simplified evaluation of adhesiveness, 0°C | 5 | 3 | 3 | 2 |
| Glass bonding strength [N/25 mm] 23°C | 30 | 35 | 40 | 50 |
| Aluminum bonding strength [N/25 mm] 23°C | 35 | 45 | 40 | 80 |
| Aluminum bonding strength [N/25 mm] 0°C | 100 | 50 | 50 | material breakage |
| Aluminum bonding strength [N/25 mm] -40°C | 100 | 100 | 100 | material breakage |

It can be seen from Table 1 that the fabrics obtained in the Examples have adhesiveness to ceramics, metals, and synthetic resins without necessity of primer treatment and so on. It can also be seen that the fabrics obtained in Examples 6 to 15, in which block copolymers (A-1) and (A-2) were used in combination, do not break even at 0°C or lower, have excellent flexibility, and have excellent low-temperature characteristics. Furthermore, Examples 3 to 5, 7, and 10 to 15, in each of which the MFR exceeded 10, showed excellent melt spinnability. In particular, in Examples 4, 5, 14, and 15, in each of which the viscosity ratio was less than 2, the fiber production and the nonwoven-fabric production were able to be stably conducted over a prolonged period. Moreover, the fabrics obtained in Examples 3, 4, and 10 to 15, which employed A1-3 or A1-4, in each of which the polymer blocks (a1) contained in the block copolymer (A) had a weight-average molecular weight per block of 8,000 or less, have a fine texture and an excellent appearance and are low in air permeability, which indicates air tightness. These fabrics are hence suitable for use as adhesive layers.

Meanwhile, in the case where the sheet of Comparative Example was used in place of the fibrous fabrics, the adhesive layer undesirably had a thickness exceeding 100 μm. In addition, it was difficult to remove the air trapped between each adherend and the sheet of Comparative Example.

[Industrial Applicability]

The fiber provided by the invention can easily and tenaciously bond polar resins, resins containing inorganic fillers (in particular, glass fibers), ceramics, glasses, metals, or the like without requiring priming. In addition, the fibrous network of the fabric is destroyed during the thermal press bonding and the fabric thus comes into a sheet form. As a result, a thin adhesive layer which has not been obtained by sheet formation by extrusion can be formed. Furthermore, since the air which came in when the adherends and the fabric were stacked smoothly goes away through interstices among the fibers, bonding failures can be inhibited from occurring. The fabric is hence useful as an adhesive for weight, size, and cost reductions in members and for large-area bonding. This fabric can be used not only in clothing applications but in various fields such as daily goods, packaging materials, industrial supplies, automotive interior members, and food-related supplies, so as to take advantage of those properties.

While the invention has been described in detail and with reference to specific embodiments thereof, it will be apparent to one skilled in the art that various changes and modifications can be made therein without departing from the spirit and scope thereof.

This application is based on a Japanese patent application filed on February 22, 2013 (Application No. 2013-33482), the contents thereof being incorporated herein by reference.

## Claims

**1.** A fiber comprising a thermoplastic polymer composition that comprises:

a block copolymer (A) comprising at least one polymer block (a1) comprising a unit of an aromatic vinyl compound and at least one polymer block (a2) comprising a unit of a conjugated diene compound;
a polyvinyl acetal resin (B); and
a compatibilizing agent (C),
an amount of the compatibilizing agent (C) being 5 to 100 parts by mass per 100 parts by mass of the block copolymer (A).

**2.** The fiber according to claim 1, wherein the conjugated diene compound for constituting the polymer block (a2) is selected from butadiene and isoprene.

**3.** The fiber according to claim 1 or 2, wherein a block chain of the polymer block (a2) comprises a 1,4-bond in an amount of 50% by mole or less.

**4.** The fiber according to claim 1 or 2, wherein the the block copolymer (A) comprises: a block copolymer (A1) wherein the polymer block (a2) comprises a polymer block (a2-1) in which a block chain comprises a 1,4-bond in an amount of 50% by mole or less; and a block copolymer (A2) wherein the polymer block (a2) comprises a polymer block (a2-2) in which a block chain comprises a 1,4-bond in an amount of 70% by mole or larger.

**5.** The fiber according to any one of claims 1 to 4, wherein at least 70% of unsaturated double bonds in the block copolymer (A) are hydrogenated.

**6.** The fiber according to any one of claims 1 to 5, which comprises the thermoplastic polymer composition that comprises the polyvinyl acetal resin (B) in an amount of 1 to 100 parts by mass per 100 parts by mass of the block copolymer (A).

**7.** The fiber according to any one of claims 1 to 6, wherein the polyvinyl acetal resin (B) is polyvinyl butyral.

**8.** The fiber according to any one of claims 1 to 7, wherein the compatibilizing agent (C) is a polar-group-containing polyolefin.

**9.** The fiber according to claim 8, wherein the polar-group-containing polyolefin is a carboxylic-acid-modified polypropylene-based resin.

**10.** A fabric comprising a fiber according to any one of claims 1 to 9.

**11.** The fabric according to claim 10, which is a nonwoven fabric.

**12.** The nonwoven fabric according to claim 11, wherein an average fiber diameter of the fiber constituting the nonwoven fabric is 1 to 30 $\mu$m.

**13.** The nonwoven fabric according to claim 12, which has a fabric weight of 5 to 150 g/m$^2$.

**Patentansprüche**

**1.** Faser, umfassend eine thermoplastische Polymerzusammensetzung, welche umfasst:

ein Blockcopolymer (A), umfassend mindestens einen Polymerblock (a1), umfassend eine Einheit einer aromatischen Vinylverbindung, und mindestens einen Polymerblock (a2), umfassend eine Einheit einer konjugierten Dienverbindung;
ein Polyvinylacetalharz (B); und
ein Kompatibilisierungsmittel (C),
wobei eine Menge des Kompatibilisierungsmittels (C) 5 bis 100 Massenteile pro 100 Massenteile des Blockcopolymers (A) beträgt.

**2.** Faser nach Anspruch 1, wobei die konjugierte Dienverbindung zur Bildung des Polymerblocks (a2) aus Butadien und Isopren ausgewählt ist.

**3.** Faser nach Anspruch 1 oder 2, wobei eine Blockkette des Polymerblocks (a2) eine 1,4-Bindung in einer Menge von 50 Mol-% oder weniger umfasst.

**4.** Faser nach Anspruch 1 oder 2, wobei das Blockcopolymer (A) umfasst:
ein Blockcopolymer (A1), wobei der Polymerblock (a2) einen Polymerblock (a2-1) umfasst, in welchem eine Blockkette eine 1,4-Bindung in einer Menge von 50 Mol-% oder weniger umfasst; und ein Blockcopolymer (A2), wobei der Polymerblock (a2) einen Polymerblock (a2-2) umfasst, in welchem eine Blockkette eine 1,4-Bindung in einer Menge von 70 Mol-% oder mehr umfasst.

**5.** Faser nach einem der Ansprüche 1 bis 4, wobei mindestens 70% der ungesättigten Doppelbindungen in dem Blockcopolymers (A) hydriert sind.

**6.** Faser nach einem der Ansprüche 1 bis 5, welche die thermoplastische Polymerzusammensetzung umfasst, welche das Polyvinylacetalharz (B) in einer Menge von 1 bis 100 Massenteilen pro 100 Massenteile des Blockcopolymers (A) umfasst.

**7.** Faser nach einem der Ansprüche 1 bis 6, wobei das Polyvinylacetalharz (B) Polyvinylbutyral ist.

**8.** Faser nach einem der Ansprüche 1 bis 7, wobei das Kompatibilisierungsmittel (C) ein polare Gruppe-enthaltendes Polyolefin ist.

**9.** Faser nach Anspruch 8, wobei das polare Gruppe-enthaltende Polyolefin ein carbonsäuremodifiziertes polypropylenbasiertes Harz ist.

**10.** Stoff, umfassend eine Faser nach einem der Ansprüche 1 bis 9.

**11.** Stoff nach Anspruch 10, welcher ein Vliesstoff ist.

**12.** Vliesstoff nach Anspruch 11, wobei ein durchschnittlicher Faserdurchmesser der den Vliesstoff bildenden Faser 1 bis 30 $\mu$m beträgt.

**13.** Vliesstoff nach Anspruch 12, der ein Stoffgewicht von 5 von 150 g/m$^2$ aufweist.

## Revendications

1. Fibre comprenant une composition de polymères thermoplastiques, composition qui comprend :

   un copolymère à blocs (A) comprenant au moins au moins un bloc · de polymère (a1) comprenant une unité d'un composé de vinyle aromatique, et au moins un bloc de polymère (a2) comprenant une unité d'un composé de diène conjugué ;
   une résine d'acétal de polyvinyle (B) ; et
   un agent compatibilisant (C),
   une quantité de l'agent compatibilisant (C) étant comprise entre 5 parties en masse et 100 parties en masse pour 100 parties en masse du copolymère à blocs (A).

2. Fibre selon la revendication 1, dans laquelle le composé de diène conjugué servant à constituer le bloc de polymère (a2) est sélectionné parmi du butadiène et de l'isoprène.

3. Fibre selon la revendication 1 ou 2, dans laquelle une chaîne à blocs du bloc de polymère (a2) comprend une liaison 1,4 suivant une quantité de 50 % par mole ou moins.

4. Fibre selon la revendication 1 ou 2, dans laquelle le copolymère à blocs (A) comprend : un copolymère à blocs (A1) où le bloc de polymère (a2) comprend un bloc de polymère (a2-1) dans lequel une chaîne à blocs comprend une liaison 1,4 suivant une quantité de 50 % par mole ou moins ; et comprend un copolymère à blocs (A2) où le bloc de polymère (a2) comprend un bloc de polymère (a2-2) dans lequel une chaîne à blocs comprend une liaison 1,4 suivant une quantité de 70 % par mole ou suivant une quantité supérieure.

5. Fibre selon l'une quelconque des revendications 1 à 4, dans laquelle au moins 70 % de doubles liaisons non saturées dans le copolymère à blocs (A) sont hydrogénées.

6. Fibre selon l'une quelconque des revendications 1 à 5, qui comprend la composition de polymères thermoplastiques, laquelle composition comprend la résine d'acétal de polyvinyle (B) suivant une quantité allant de 1 partie en masse à 100 parties en masse pour 100 parties en masse du copolymère à blocs (A).

7. Fibre selon l'une quelconque des revendications 1 à 6, dans laquelle la résine d'acétal de polyvinyle (B) est du butyral de polyvinyle.

8. Fibre selon l'une quelconque des revendications 1 à 7, dans laquelle l'agent compatibilisant (C) est une polyoléfine contenant un groupe polaire.

9. Fibre selon la revendication 8, dans laquelle la polyoléfine contenant un groupe polaire est une résine à base de polypropylène modifié par un acide carboxylique.

10. Tissu comprenant une fibre selon l'une quelconque des revendications 1 à 9.

11. Tissu selon la revendication 10, qui est un tissu non tissé.

12. Tissu non tissé selon la revendication 11, dans lequel un diamètre de fibre moyen de la fibre constituant le tissu non tissé est compris entre 1 $\mu$m et 30 $\mu$m.

13. Tissu non tissé selon la revendication 12, qui a un poids de tissu allant de 5 g/$m^2$ à 150 g/$m^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009081877 A
- WO 2011125796 A
- WO 2012005270 A
- WO 2012026501 A
- WO 2012014757 A
- US 2008161485 A
- JP 2013033482 A


### Non-patent literature cited in the description


- *Industrial and Engineering Chemistry,* 1956, vol. 48 (8), 1342-1346